# EUROPEAN PATENT SPECIFICATION

(11) **EP 4 466 693 B1**
(45) Date of publication and mention of the grant of the patent: **28.10.2026**
(21) Application number: 22839599.2
(22) Date of filing: 28.11.2022
(51) Int. Cl.: G06F 17/14, G06N 3/0442, G06N 3/0455, G06N 3/0464, G06N 3/08, G10L 13/047, G10L 19/16, G06F 17/16, G06F 17/18

(54) **SAMPLE GENERATION USING PIPELINED PROCESSING UNITS**
SAMPLE-ERZEUGUNG UNTER VERWENDUNG VON IN PIPELINE ORGANISIERTEN VERARBEITUNGSEINHEITEN
GÉNÉRATION D'ÉCHANTILLON À L'AIDE D'UNITÉS DE TRAITEMENT EN PIPELINE

(30) Priority: 18.01.2022 GR 20220100043
(43) Date of publication of application: 27.11.2024
(73) Proprietor: QUALCOMM INCORPORATED, San Diego, California 92121-1714 (US)
(72) Inventor: RAJENDRAN, Vivek, San Diego, California 92121 (US); KULKARNI, Prajakt, San Diego, California 92121 (US); SKORDILIS, Zisis Iason, San Diego, California 92121 (US)
(74) Representative: Reddie & Grose LLP
(86) International application number: PCT/US2022/080477
(87) International publication number: WO 2023/140976

(56) References cited:
- BOILARD JONATHAN ET AL: "A Literature Review of WaveNet: Theory, Application, and Optimization", AES CONVENTION 146; MARCH 2019, AES, 60 EAST 42ND STREET, ROOM 2520 NEW YORK 10165-2520, USA, 10 March 2019 (2019-03-10), XP040706515
- AARON VAN DEN OORD ET AL: "WaveNet: A Generative Model for Raw Audio", ARXIV.ORG, CORNELL UNIVERSITY LIBRARY, 201 OLIN LIBRARY CORNELL UNIVERSITY ITHACA, NY 14853, 12 September 2016 (2016-09-12), XP080725972

## Description

### I. Field

The present disclosure is generally related to generating audio sample data based on a multi-stage sample synthesis operation.

### II. Description of Related Art

Advances in technology have resulted in smaller and more powerful computing devices. For example, there currently exist a variety of portable personal computing devices, including wireless telephones such as mobile and smart phones, tablets and laptop computers that are small, lightweight, and easily carried by users. These devices can communicate voice and data packets over wireless networks. Further, many such devices incorporate additional functionality such as a digital still camera, a digital video camera, a digital recorder, and an audio file player. Also, such devices can process executable instructions, including software applications, such as a web browser application, that can be used to access the Internet. As such, these devices can include significant computing capabilities.

Such computing devices may include the capability to generate sample data, such as reconstructed audio samples. For example, a device may receive encoded audio data that is decoded and processed to generate reconstructed audio samples. Processing encoded audio data to generate a reconstructed audio sample may include using a sequence of calculations, each of which may have different computational requirements. As an illustrative example, generating a reconstructed audio sample may include neural network inference, linear filtering, and other types of computations. In addition, such devices may face various constraints associated with generating reconstructed samples, such as an industry standard that specifies an audio sample generation rate and an audio quality of reconstructed samples.

The performance of such devices can be improved by increasing device efficiency, such as by reducing per-sample power consumption, while also satisfying time constraints and quality constraints associated with sample generation. Improved device performance can also improve a user experience in terms of quality of audio playback, device cost, and battery life.
AARON VAN DEN OORD ET AL: "WaveNet: A Generative Model for Raw Audio", ARXIV.ORG, CORNELL UNIVERSITY LIBRARY, 201 OLIN LIBRARY CORNELL UNIVERSITY ITHACA, NY 14853, 12 September 2016 discloses WaveNet, a deep neural network tool for generating raw audio waveforms.
BOILARD JONATHAN ET AL: "A Literature Review of WaveNet: Theory, Application, and Optimization", AES CONVENTION 146; MARCH 2019, AES, 60 EAST 42ND STREET, ROOM 2520 NEW YORK 10165-2520, USA, 10 March 2019 presents a review of the literature on WaveNet.

### III. Summary

The invention is defined in the independent claims. Optional features are set out in the dependent claims.

Other aspects, advantages, and features of the present disclosure will become apparent after review of the entire application, including the following sections: Brief Description of the Drawings, Detailed Description, and the Claims.

### IV. Brief Description of the Drawings

FIG. 1 is a diagram of a particular illustrative aspect of a system operable to generate sample data using pipelined processing units and an illustrative example of sample generation using pipelined processing units, in accordance with some examples of the present disclosure.
FIG. 2 is a diagram of an illustrative example of sample generation using multiple processing units, in accordance with some examples of the present disclosure.
FIG. 3 is a diagram of a particular illustrative implementation of components of the system of FIG. 1 and an illustrative example of sample generation using pipelined processing units, in accordance with some examples of the present disclosure.
FIG. 4 is a diagram of illustrative examples of audio subbands corresponding to sample data that may be generated by the system of FIG. 1, in accordance with some examples of the present disclosure.
FIG. 5 is a diagram of another illustrative implementation of components of the system of FIG. 1, in accordance with some examples of the present disclosure.
FIG. 6 is a diagram of another illustrative implementation of components of the system of FIG. 1, in accordance with some examples of the present disclosure.
FIG. 7 is a diagram of another illustrative implementation of components of the system of FIG. 1, in accordance with some examples of the present disclosure.
FIG. 8 is a diagram of a particular illustrative example of sequences of samples that may be generated by the system of FIG. 1, in accordance with some examples of the present disclosure.
FIG. 9 is a diagram of another particular illustrative example of sequences of samples that may be generated by the system of FIG. 1, in accordance with some examples of the present disclosure.
FIG. 10 is a diagram of another particular illustrative example of sequences of samples that may be generated by the system of FIG. 1, in accordance with some examples of the present disclosure.
FIG. 11 is a diagram of a particular illustrative aspect of a system operable to generate sample data using pipelined processing units, in accordance with some examples of the present disclosure.
FIG. 12 is a diagram of a particular illustrative implementation of components that may be included in the system of FIG. 1 or FIG. 11, in accordance with some examples of the present disclosure.
FIG. 13 is a diagram of illustrative implementations of linear prediction (LP) modules of a sample generation network of FIG. 12, in accordance with some examples of the present disclosure.
FIG. 14 illustrates an example of an integrated circuit operable to generate sample data using pipelined processing units, in accordance with some examples of the present disclosure.
FIG. 15 is a diagram of a mobile device operable to generate sample data using pipelined processing units, in accordance with some examples of the present disclosure.
FIG. 16 is a diagram of a headset operable to generate sample data using pipelined processing units, in accordance with some examples of the present disclosure.
FIG. 17 is a diagram of a wearable electronic device operable to generate sample data using pipelined processing units, in accordance with some examples of the present disclosure.
FIG. 18 is a diagram of a voice-controlled speaker system operable to generate sample data using pipelined processing units, in accordance with some examples of the present disclosure.
FIG. 19 is a diagram of a camera operable to generate sample data using pipelined processing units, in accordance with some examples of the present disclosure.
FIG. 20 is a diagram of a headset, such as a virtual reality, mixed reality, or augmented reality headset, operable to generate sample data using pipelined processing units, in accordance with some examples of the present disclosure.
FIG. 21 is a diagram of a first example of a vehicle operable to generate sample data using pipelined processing units, in accordance with some examples of the present disclosure.
FIG. 22 is a diagram of a second example of a vehicle operable to generate sample data using pipelined processing units, in accordance with some examples of the present disclosure.
FIG. 23 is diagram of a particular implementation of a method of generating sample data using pipelined processing units that may be performed by the device of FIG. 1, in accordance with some examples of the present disclosure.
FIG. 24 is a block diagram of a particular illustrative example of a device that is operable to generate sample data using pipelined processing units, in accordance with some examples of the present disclosure.

### V. Detailed Description

Systems and methods to generate sample data using pipelined processing units are disclosed. Processing input data to generate an output sample, such as processing encoded audio data to generate a reconstructed audio sample, may include a variety of different computational requirements and may also be subject to constraints such as time and quality constraints associated with sample generation. Performing the various computational requirements while satisfying such constraints can be difficult to achieve in a conventional system without incurring penalties such as increased per-sample power consumption and device cost, both of which can negatively impact a user's experience with the system. By using pipelined processing units, a first processing unit may be used to efficiently perform a first subset of computational tasks and a second processing unit may be used to efficiently perform a second subset of the computational tasks, while maintaining a high utilization rate of each of the processing units. Efficient performance of the computational tasks and a high utilization rate of each processing unit enables satisfaction of quality and time constraints while also mitigating impact to power consumption and device cost.

According to a particular aspect, an autoregressive sample-by-sample network is partitioned to create parallel execution paths to enable workload distribution between multiple different processors for pipelined execution. In some implementations, a neural processing unit (NPU) is used for heavy computational loads associated with neural network processing, and a digital signal processor (DSP) is used for other computational tasks, such as linear filtering, that can be more efficiently performed by the DSP than by the NPU. A signal to be reconstructed can be split into frequency bands, such as a low band and a high band, and processing of samples of each band is pipelined at the DSP and the NPU so that each of the DSP and the NPU alternates between processing of samples of the low band and samples of the high band. According to an aspect, the DSP also prepares data for a next iteration of NPU processing for a sample of one of the frequency bands while the NPU processes a sample of the other frequency band. As a result, the NPU may run in a continuous (or near-continuous) manner to achieve maximum (or near-maximum) utilization.

In some implementations, instead of splitting the signal into frequency bands, the signal is split in the time domain, such as divided into even and odd samples, or split into left (L) and right (R) channels in the case of a stereo signal, as illustrative, non-limiting examples.

According to some aspects, pipelining of computational units can also be applied to hardware multithreading in DSPs or central processing units (CPUs), in single cores or multiple cores. For example, neural network processing can be launched on a first thread of a processor core, and sampling and linear filtering can be launched on a second thread of the processor core, or a thread of a different processor core.

Pipelining of computational tasks for sample generation enables increased utilization of computational resources, such as DSP or CPU core utilization, for improved throughput of generated samples as compared to serially executing the computational tasks.

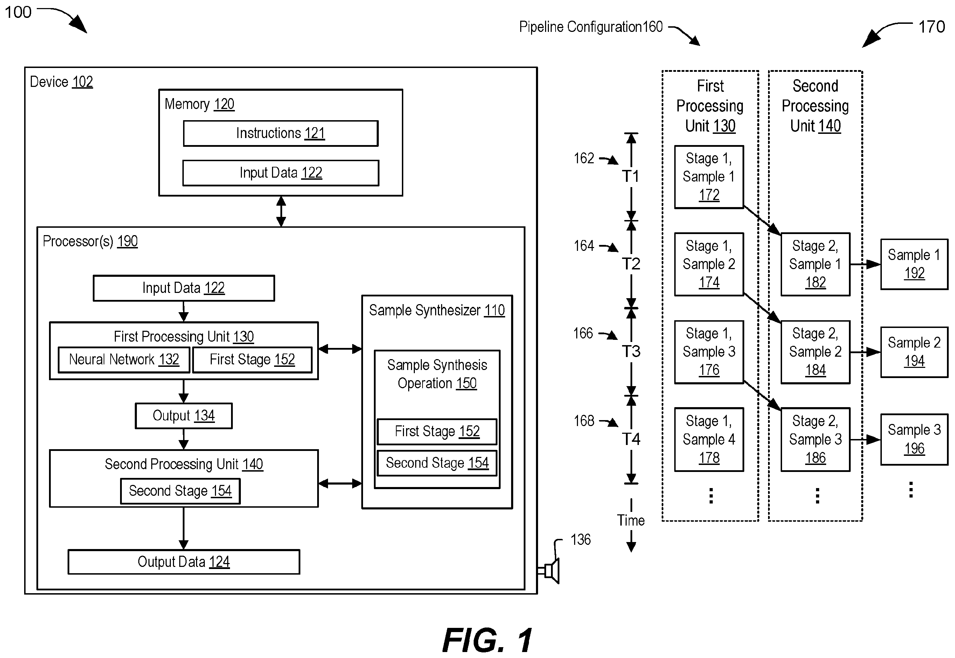

Particular aspects of the present disclosure are described below with reference to the drawings. In the description, common features are designated by common reference numbers. As used herein, various terminology is used for the purpose of describing particular implementations only and is not intended to be limiting of implementations. For example, the singular forms "a," "an," and "the" are intended to include the plural forms as well, unless the context clearly indicates otherwise. Further, some features described herein are singular in some implementations and plural in other implementations. To illustrate, FIG. 1 depicts a device 102 including one or more processors ("processor(s)" 190 of FIG. 1), which indicates that in some implementations the device 102 includes a single processor 190 and in other implementations the device 102 includes multiple processors 190. For ease of reference herein, such features are generally introduced as "one or more" features and are subsequently referred to in the singular unless aspects related to multiple of the features are being described. In some drawings, multiple instances of a particular type of feature are used. Although these features are physically and/or logically distinct, the same reference number is used for each, and the different instances are distinguished by addition of a letter to the reference number.

As used herein, the terms "comprise," "comprises," and "comprising" may be used interchangeably with "include," "includes," or "including." Additionally, the term "wherein" may be used interchangeably with "where." As used herein, "exemplary" indicates an example, an implementation, and/or an aspect, and should not be construed as limiting or as indicating a preference or a preferred implementation. As used herein, an ordinal term (e.g., "first," "second," "third," etc.) used to modify an element, such as a structure, a component, an operation, etc., does not by itself indicate any priority or order of the element with respect to another element, but rather merely distinguishes the element from another element having a same name (but for use of the ordinal term). As used herein, the term "set" refers to one or more of a particular element, and the term "plurality" refers to multiple (e.g., two or more) of a particular element.

As used herein, "coupled" may include "communicatively coupled," "electrically coupled," or "physically coupled," and may also (or alternatively) include any combinations thereof. Two devices (or components) may be coupled (e.g., communicatively coupled, electrically coupled, or physically coupled) directly or indirectly via one or more other devices, components, wires, buses, networks (e.g., a wired network, a wireless network, or a combination thereof), etc. Two devices (or components) that are electrically coupled may be included in the same device or in different devices and may be connected via electronics, one or more connectors, or inductive coupling, as illustrative, non-limiting examples. In some implementations, two devices (or components) that are communicatively coupled, such as in electrical communication, may send and receive signals (e.g., digital signals or analog signals) directly or indirectly, via one or more wires, buses, networks, etc. As used herein, "directly coupled" may include two devices that are coupled (e.g., communicatively coupled, electrically coupled, or physically coupled) without intervening components.

In the present disclosure, terms such as "determining," "calculating," "estimating," "shifting," "adjusting," etc. may be used to describe how one or more operations are performed. It should be noted that such terms are not to be construed as limiting and other techniques may be utilized to perform similar operations. Additionally, as referred to herein, "generating," "calculating," "estimating," "using," "selecting," "accessing," and "determining" may be used interchangeably. For example, "generating," "calculating," "estimating," or "determining" a parameter (or a signal) may refer to actively generating, estimating, calculating, or determining the parameter (or the signal) or may refer to using, selecting, or accessing the parameter (or signal) that is already generated, such as by another component or device.

Referring to FIG. 1, a particular illustrative aspect of a system 100 configured to generate sample data using pipelined processing units and a diagram 170 of an example of sample generation using pipelined processing units are shown. The device 102 includes a memory 120 coupled to one or more processors 190. A sample synthesizer 110 of the one or more processors 190 is configured to process input data 122, using a first processing unit 130 and a second processing unit 140 that are configured to operate in a pipelined configuration 160, to generate output data 124.

The memory 120 is configured to store instructions 121, such as instructions that are executable by the processor 190 to perform operations associated with the sample synthesizer 110. In some implementations, the memory 120 stores the input data 122, such as encoded audio data or encoded image data, etc., that is provided to the sample synthesizer 110 for decoding and reconstruction of an output audio signal or video signal. In other implementations, the input data 122 corresponds to unencoded audio data or image data that is provided to the sample synthesizer 110. In an illustrative implementation, the sample synthesizer 110 is configured to perform neural speech synthesis where the input data 122 includes feature (or text) inputs that may not be encoded or quantized.

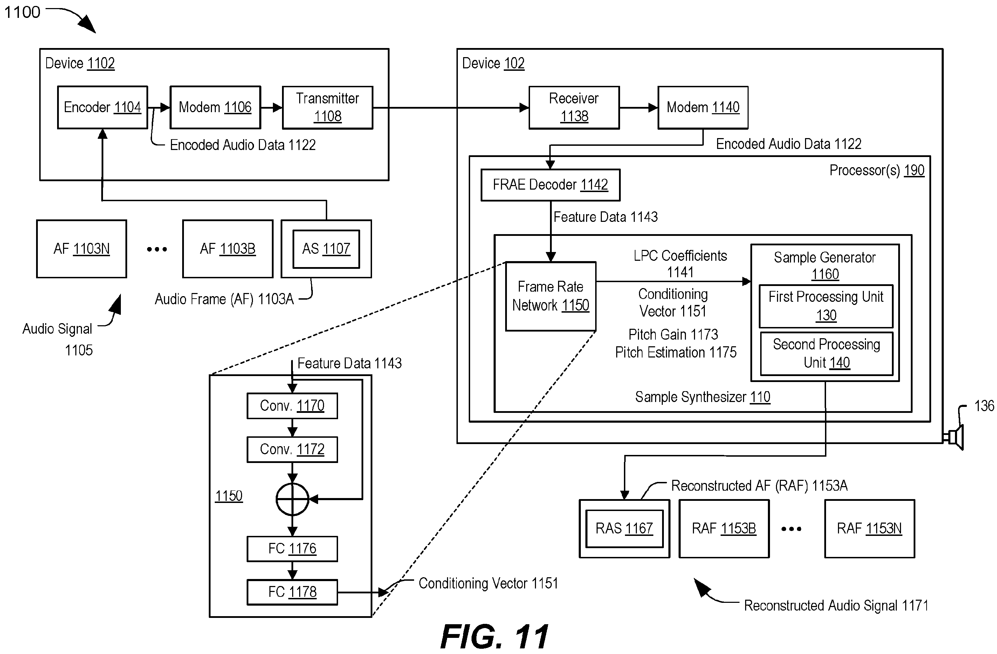

The sample synthesizer 110 is configured to process the input data 122 to generate output data 124, such as audio output data or image output data, as illustrative examples. For example, the input data 122 can include data representing quantization of features extracted from a source audio signal, as described in further detail with reference to FIG. 11. The output data 124 may be played out as a reconstructed audio signal at one or more speakers 136, which may be integrated in, or coupled to, the device 102.

Operations associated with sample synthesis based on the input data 122 are performed using the first processing unit 130 and the second processing unit 140. The first processing unit 130 is configured to perform a first stage 152 of a sample synthesis operation 150 that results in generation of an output 134. In some aspects, the first processing unit 130 includes a neural network 132 that is configured to perform the first stage 152 of the sample synthesis operation 150. In some implementations, the sample synthesis operation 150 corresponds to an autoregressive sample-by-sample synthesis, such as described further with reference to FIGs. 11-13.

In some implementations, the neural network 132 is configured to generate the output 134 as a probability distribution based on one or more neural network inputs. In an example, the neural network 132 includes an autoregressive (AR) generative neural network that is configured to use one or more previous samples generated by the sample synthesizer 110 as input for processing during generation of a subsequent sample. In some implementations, the neural network 132 generates a neural network embedding based on the one or more neural network inputs, and the neural network embedding is processed by one or more layers of nodes of the neural network 132 to generate the output 134. In some aspects, the neural network 132 includes a convolutional neural network (CNN), WaveNet, PixelCNN, a transformer network with an encoder and a decoder, Bert, another type of AR generative neural network, or a combination thereof.

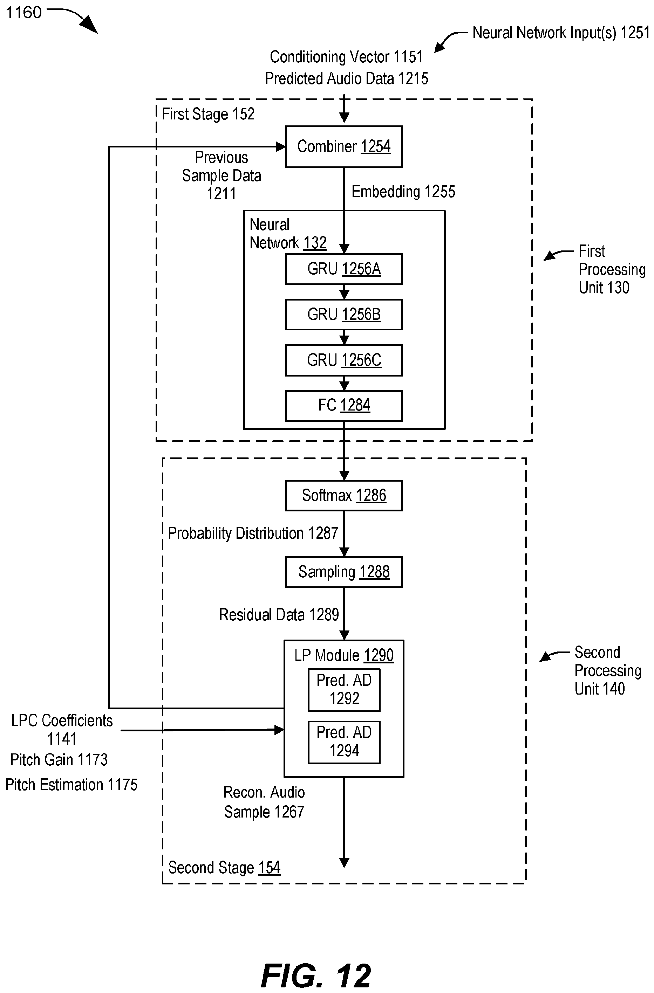

The second processing unit 140 is configured to perform a second stage 154 of the sample synthesis operation 150 based on an output 134 of the first processing unit 130. For example, in some implementations, the second processing unit 140 is configured to generate a residual based on the output 134 of the first stage 152 and to process the residual based on linear predictive coefficients to generate a sample of an audio signal, as described further with reference to FIGs. 12-13. The generated sample is included in the output data 124 and may correspond to a time sample of an audio signal.

Pipelined processing of the first stage 152 and the second stage 154 by the first processing unit 130 and the second processing unit 140, respectively, is depicted in the diagram 170. In the diagram 170, the vertical axis represents time and indicates a first time period (T1) 162, a second time period (T2) 164, a third time period (T3) 166, and a fourth time period (T4) 168. The time periods 162-168 may also be referred to as "clock cycles" or "pipeline clock cycles," although it should be understood that pipelined operation can be achieved without using a dedicated clock to synchronize the pipeline.

During the first time period 162, the first processing unit 130 initiates the sample synthesis operation 150 for a first sample 192 by performing an operation 172 that corresponds to executing the first stage 152 to generate an output 134 corresponding to the first sample 192.

During the second time period 164, the second processing unit 140 completes the sample synthesis operation 150 for the first sample 192 by performing an operation 182 that corresponds to executing the second stage 154 to generate the first sample 192. Also during the second time period 164, the first processing unit 130 initiates the sample synthesis operation 150 for a second sample 194 by performing an operation 174 that corresponds to executing the first stage 152 to generate an output 134 corresponding to the second sample 194.

During the third time period 166, the second processing unit 140 completes the sample synthesis operation 150 for the second sample 194 by performing an operation 184 that corresponds to executing the second stage 154 to generate the second sample 194. Also during the third time period 166, the first processing unit 130 initiates the sample synthesis operation 150 for a third sample 196 by performing an operation 176 that corresponds to executing the first stage 152 to generate an output 134 corresponding to the third sample 196.

During the fourth time period 168, the second processing unit 140 completes the sample synthesis operation 150 for the third sample 196 by performing an operation 186 that corresponds to executing the second stage 154 to generate the third sample 196. Also during the fourth time period 168, the first processing unit 130 initiates the sample synthesis operation 150 for a fourth sample by performing an operation 178 that corresponds to executing the first stage 152 to generate an output 134 corresponding to the fourth sample.

As illustrated in the diagram 170, the first processing unit 130 and the second processing unit 140 are configured to operate in the pipelined configuration 160 that includes performance of the second stage 154 at the second processing unit 140 in parallel with performance of the first stage 152 at the first processing unit 130. For example, the second stage 154 for the first sample 192 is performed in parallel with the first stage 152 for the second sample 194 during the second time period 164. As used herein, two operations are performed "in parallel" when the operations are both performed concurrently (e.g., during the same time period or clock cycle), even though the operations may have different starting times from each other, different ending times from each other, different durations, or any combination thereof.

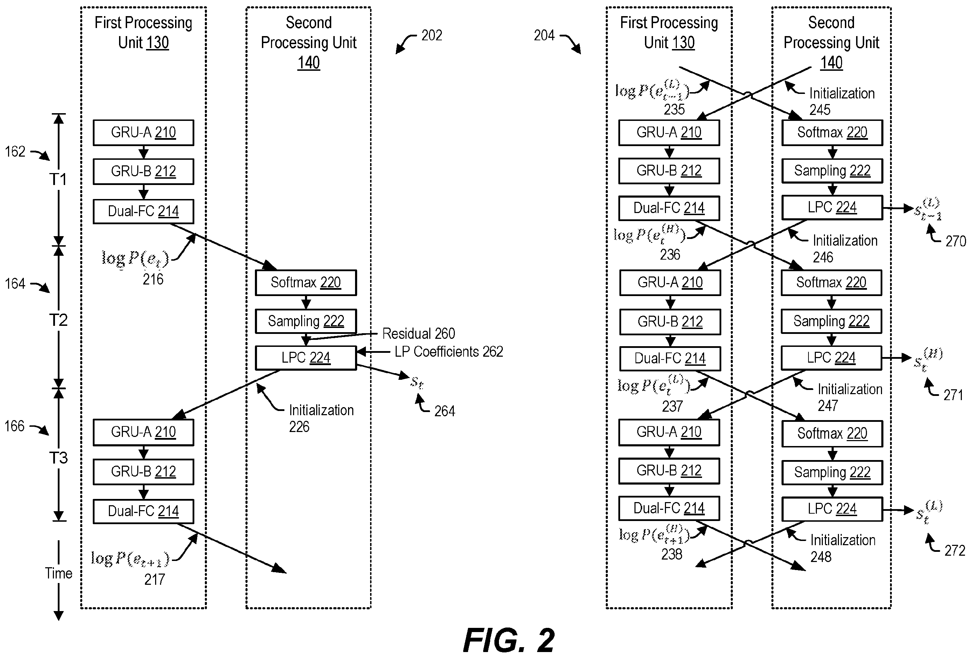

Although the diagram 170 illustrates that, for a given sample, the first stage 152 is initiated in the first processing unit 130 independent of (e.g., without having access to or prior to the generation of) the output of the second stage 154 for the preceding sample, in other implementations a sample generated by the second stage 154 is used as an input for the first stage 152 of the next sample of a sequence of samples. In such implementations, the sample synthesizer 110 may partition an input signal, such as an audio signal, into two sequences of samples and may alternate between generating samples of one sequence and generating samples of the other sequence, as described further below and with reference to FIGS. 2-4 and 8-10.

In an illustrative example, the samples 192-196 correspond to consecutive time-domain audio samples of a single sequence of samples, which corresponds to an audio signal represented by the output data 124. However, in other implementations, the sample synthesizer 110 is configured to alternate, on a sample-by-sample basis, between generation of samples of a first sequence of samples and generation of samples of a second sequence of samples. To illustrate, the first sample 192 and the third sample 196 may be consecutive audio samples of a first sequence of audio samples, and the second sample 194 and the fourth sample may be consecutive audio samples of a second sequence of audio samples.

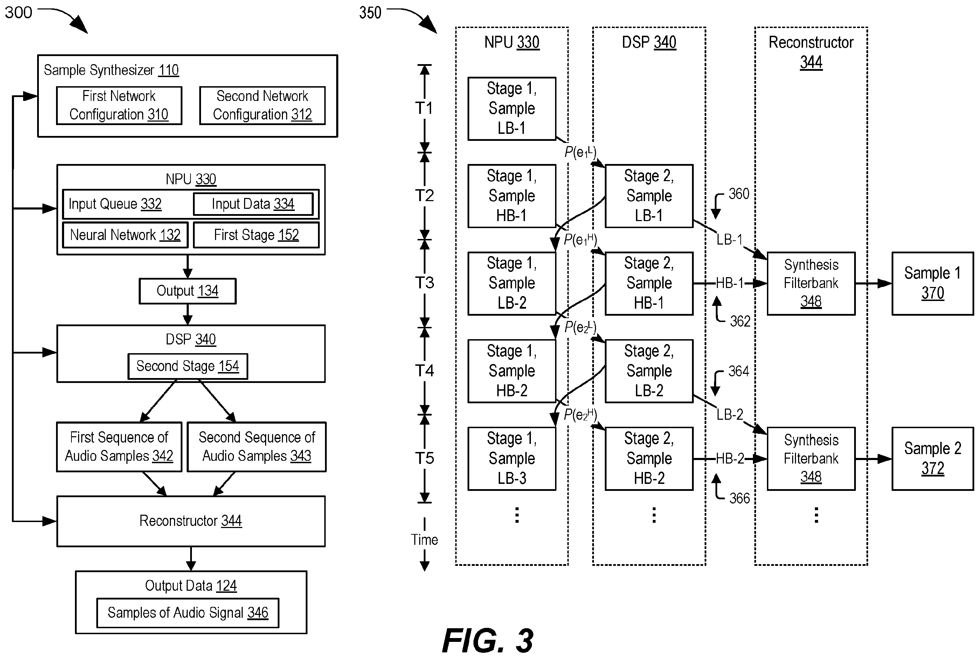

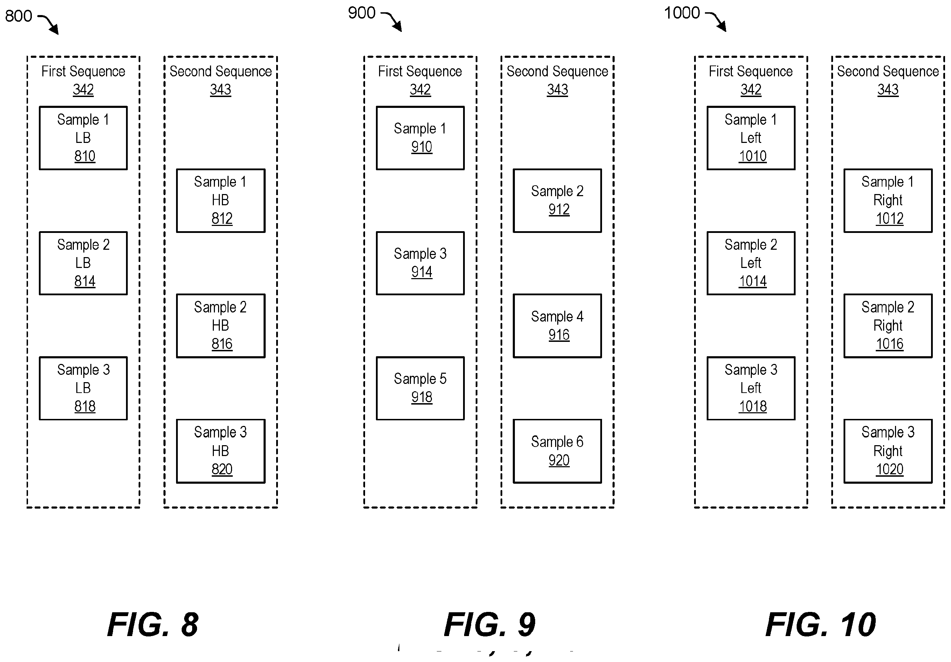

In an illustrative example, the first sequence of samples includes first subband samples (e.g., first subband audio samples) corresponding to a first frequency band of the output data 124 and the second sequence of samples includes second subband samples (e.g., second subband audio samples) corresponding to a second frequency band of the output data 124, as described further with reference to FIG. 3, FIG. 4, and FIG. 8. In another illustrative example, the first sequence of samples corresponds to odd-numbered samples of the output data 124, and the second sequence of samples corresponds to even-numbered samples of the output data 124, such as described further with reference to FIG. 9. In another illustrative example in which the input data 122 corresponds to stereo audio data that includes a first audio signal (e.g., a Left signal) and a second audio signal (e.g., a Right signal), the first sequence of samples corresponds to the first audio signal, and the second sequence of samples corresponds to the second audio signal, such as described further with reference to FIG. 10.

In some implementations, the first processing unit 130 includes an input queue, and the second processing unit 140 is further configured to populate the input queue of the first processing unit 130. For example, during the second time period 164, while the first processing unit 130 is processing one iteration of the first stage 152 for the second sample 194, the second processing unit 140 may also populate the input queue of the first processing unit 130 to initialize the next iteration of the first stage 152 (for the third sample 196). When the processing load associated with the second processing unit 140 performing the second stage 154 is sufficiently light to enable the second processing unit to perform the second stage 154 and to also initialize the next iteration of the first stage 152 during the same pipeline clock cycle, latency associated with offloading processing to the first processing unit 130 can be masked, such as described further with reference to FIG. 3.

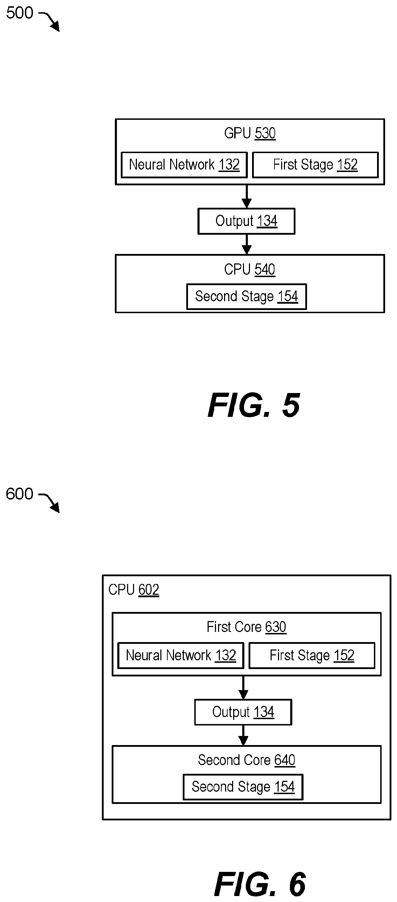

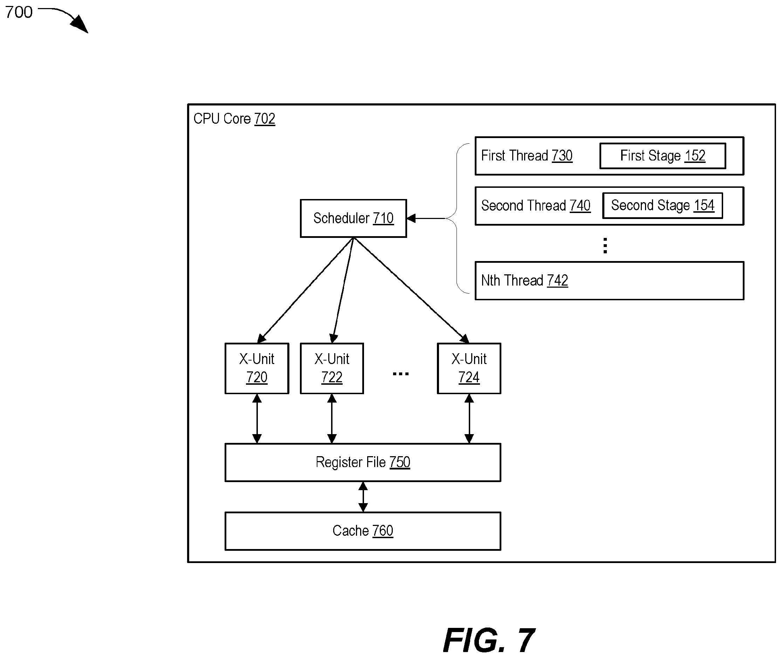

Each of the first processing unit 130 and the second processing unit 140 may be implemented using various type of computational devices, such neural processing units (NPUs), digital signal processors (DSPs), graphics processing units (GPUs), central processing unit (CPU) threads at multiple cores or at a single core, as illustrative, non-limiting examples. In an illustrative example that is described further with reference to FIG. 3, the first processing unit 130 includes a neural processing unit that is more efficient with computations involving the neural network 132 and less efficient with computations performed in the second stage 154 (e.g., linear filtering), and the second processing unit 140 includes a digital signal processor that is more efficient with computations performed in the second stage 154 and less efficient with computations involving the neural network 132. In another example, the first processing unit 130 includes a graphics processing unit, and the second processing unit 140 includes a central processing unit, such as described further with reference to FIG. 5. In another example, the first processing unit 130 includes a first thread at a first core of a central processing unit, and the second processing unit 140 includes a second thread at a second core of the central processing unit, such as described further with reference to FIG. 6. In another example, the first processing unit 130 corresponds to a first thread of a core of a central processing unit, and the second processing unit 140 corresponds to a second thread of the core of the central processing unit, such as described further with reference to FIG. 7.

Although operation of the system 100 is described in various examples in terms of generating audio samples to construct (or reconstruct) an audio signal associated with the input data 122, in other implementations, the system 100 can alternatively, or additionally, generate samples corresponding to other types of data, such as image data, video data, or various other types of data.

Although the first processing unit 130 is illustrated as including the neural network 132, in other implementations the first processing unit 130 does not include the neural network 132 and the second processing unit 140 includes the neural network 132. In some implementations, each of the first processing unit 130 and the second processing unit 140 includes a neural network, and in some implementations, neither the first processing unit 130 nor the second processing unit 140 includes a neural network.

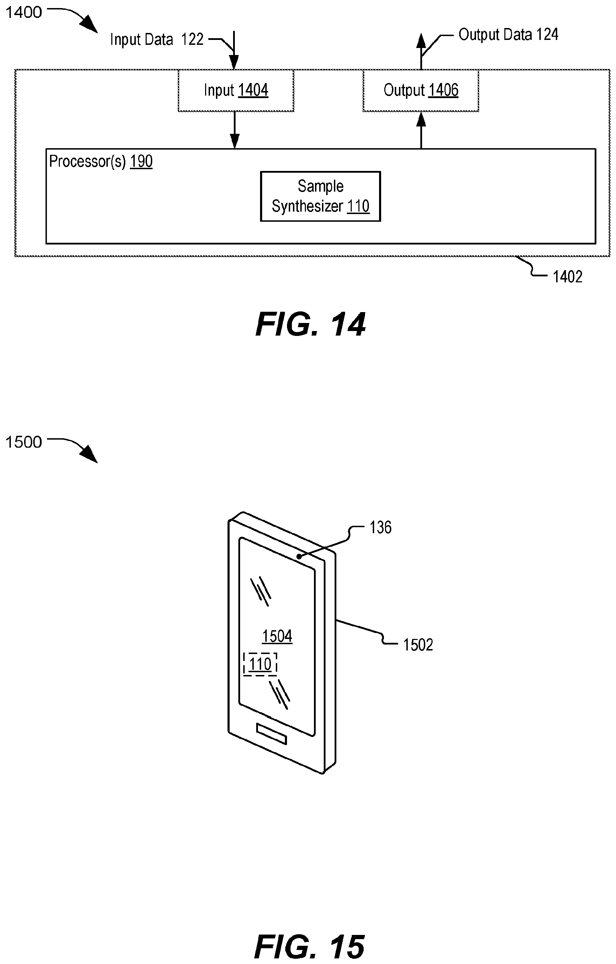

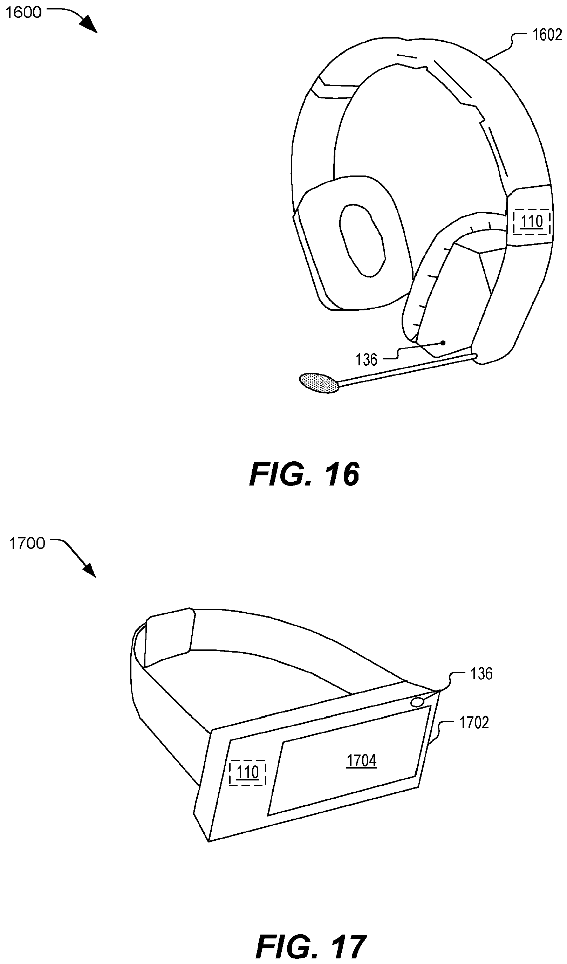

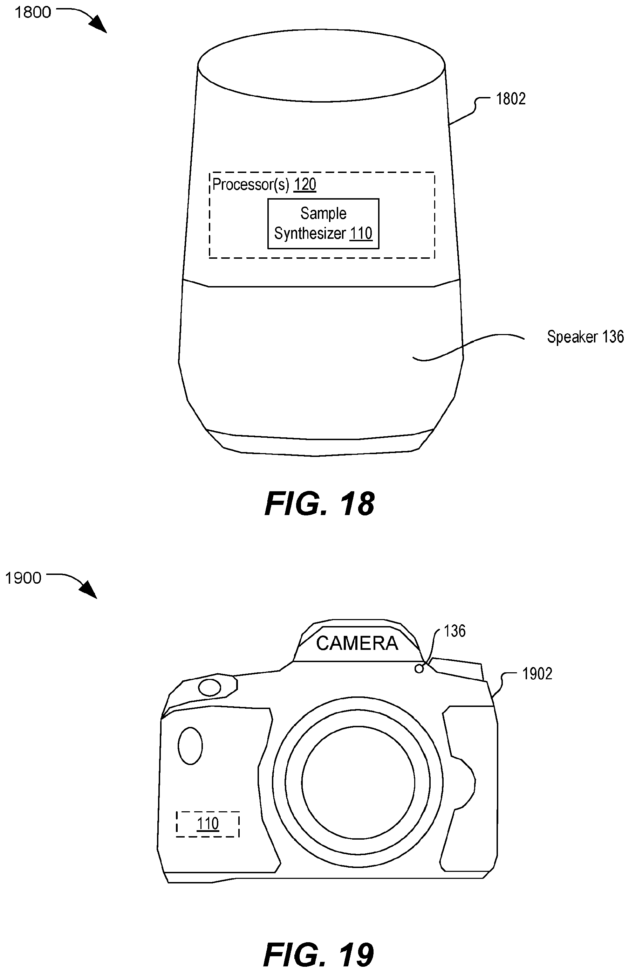

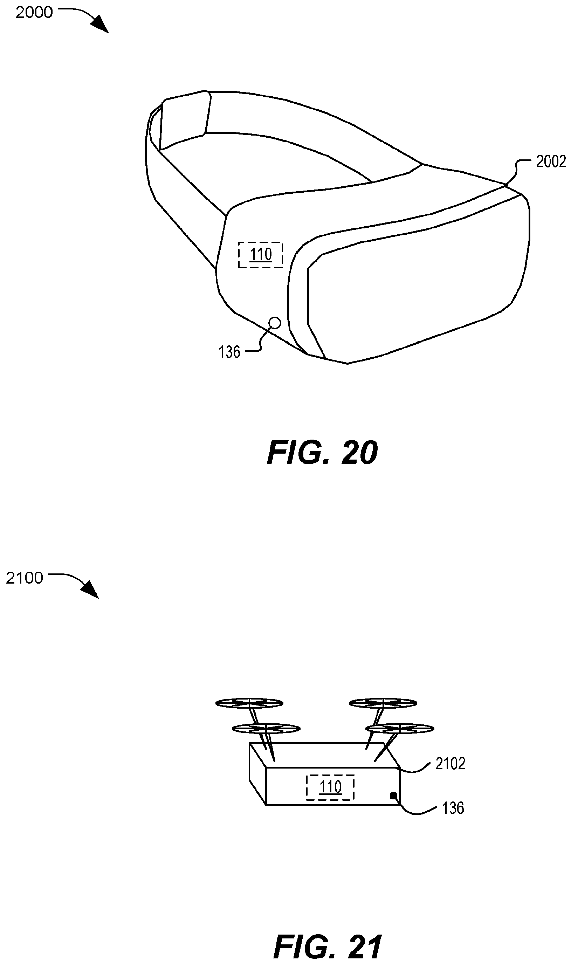

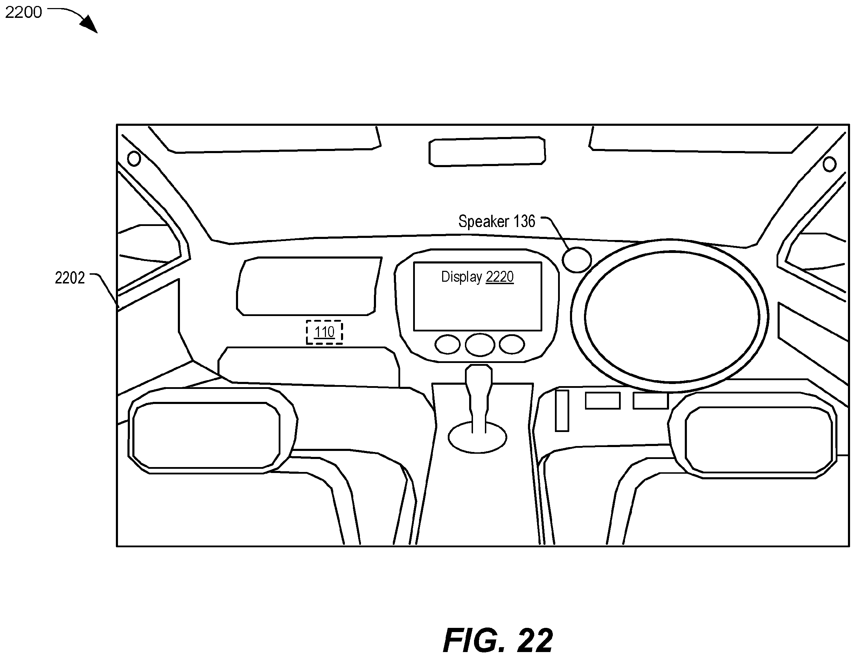

In some implementations, the device 102 corresponds to or is included in one of various types of devices. In an illustrative example, the one or more processors 190 are integrated in a headset device, such as described further with reference to FIG. 16. In other examples, the one or more processors 190 are integrated in at least one of a mobile phone or a tablet computer device, as described with reference to FIG. 15, a wearable electronic device, as described with reference to FIG. 17, a voice-controlled speaker system, as described with reference to FIG. 18, a camera device, as described with reference to FIG. 19, or a virtual reality, mixed reality, or augmented reality headset, as described with reference to FIG. 20. In another illustrative example, the one or more processors 190 are integrated into a vehicle, such as described further with reference to FIG. 21 and FIG. 22.

Referring to FIG. 2, a first diagram 202 and a second diagram 204 depict illustrative examples of sample generation using a particular implementation of the first processing unit 130 and the second processing unit 140 of FIG. 1. The first diagram 202 illustrates sequential processing, and the second diagram 204 illustrates pipeline processing.

The first processing unit 130 includes multiple recurrent layers and a feed forward layer. In the illustrated example, each recurrent layer includes a gated recurrent unit (GRU), and the multiple recurrent layers include a first recurrent layer, labelled GRU-A 210, and a second recurrent layer, labelled GRU-B 212. The feed forward layer includes a fully connected (FC) layer, such as a dual fully connected layer (dual-FC) 214. The GRU-A 210 is coupled to the GRU-B 212, and the GRU-B is coupled to the dual-FC 214. In a particular implementation, the GRU-A 210, the GRU-B 212, and the dual-FC 214 are included in the neural network 132 of FIG. 1 and correspond to the first stage 152. The dual-FC 214 generates an output that corresponds to the output 134.

In the illustrated example, the second processing unit 140 is configured to perform a softmax operation 220, a sampling operation 222, and a linear predictive coding (LPC) operation 224. In some implementations, the softmax operation 220, the sampling operation 222, and the LPC operation 224 correspond to the second stage 154.

Although the first processing unit 130 is illustrated as including two recurrent layers, in other examples, the first processing unit 130 (e.g., the neural network 132) can include fewer than two or more than two recurrent layers. In some implementations, the first processing unit 130 may include one or more additional layers, one or more additional connections, or a combination thereof, that are not shown for ease of illustration. Similarly, the second processing unit 140 can include one or more other layers or operations in place or, or in addition to, the softmax operation 220, the sampling operation 222, and the LPC operation 224.

In the first diagram 202, generation of a sample *sₜ* 264 in a sequence of samples representing an audio signal begins in the first time period T1 162, during which the first processing unit 130 process an input (not shown) that can include a previous reconstructed sample *s*_{*t*-1} of the sequence of samples. After processing is completed at the GRU-A 210, the GRU-B 212, and the dual-FC 214, an output 216 is generated. The output 216 includes information regarding a probability distribution of a residual *eₜ* 260 for the first sample, such as log *P*(*eₜ*).

During the second time period T2 164, the second processing unit 140 generates the residual 260 based on the output of the first stage 152 and processes the residual 260 based on linear predictive (LP) coefficients 262 to generate the sample *sₜ* 264 of the audio signal. For example, the output 216 is processed at the softmax operation 220 to generate a representation of the probability distribution of the residual 260, and the sampling operation 222 outputs the residual 260 to the LPC operation 224. The LPC operation 224 generates the sample *sₜ* 264 based on previous samples, the LP coefficients 262, and the residual 260, such as described further with reference to FIGS. 11-13.

Also during the second time period T2 164, the second processing unit 140 performs an initialization 226 of the first processing unit 130 for processing the next sample *s*_{*t+*1} of the sequence of samples representing the audio signal. To illustrate, the second processing unit 140 may load the sample *sₜ* 264, the residual 260, one or more predictions or other values generated at the second processing unit 140, or a combination thereof, into an input queue of the neural network 132.

During the third time period T3 166, the first processing unit 130 initiates processing to generate the next sample *s*_{*t+*1}, generating an output 217 (e.g., log *P*(*e*_{*t*+1})) based on inputs provided via the initialization 226 in a similar manner as described for the first time period T1 162.

In the sequential processing illustrated in the first diagram 202, the first processing unit 130 is idle for a period of time while the second processing unit 140 is operational, such as during the second time period T2 164, and therefore the first processing unit 130 has relatively low utilization. In addition, a delay associated with initializing the first processing unit 130 (also referred to herein as "offloading overhead") is incurred every sample. To illustrate, since processing for sample *s*_{*t*+1} at the first processing unit 130 is based on values generated at the second processing unit 140 for sample *sₜ*, the first processing unit 130 does not begin processing for the sample *s*_{*t*+1} until after sample *sₜ* has been generated and the initialization 226 has been performed. In an example audio decoding implementation, for a 16 kilohertz (kHz) sampling rate, a sample is generated every 62 microseconds (on average). In an implementation in which the first processing unit 130 includes an NPU, because the NPU offloading overhead associated with the initialization 226 may consume 10-20 microseconds, an average sample generation rate of 62 microseconds per sample may be unattainable using the sequential processing illustrated in the first diagram 202.

The second diagram 204 illustrates pipelined processing that reduces or eliminates the offloading overhead and the low utilization associated with the sequential processing of the first diagram 202. In the second diagram 204, two sequences of samples are used to represent the audio signal to be reconstructed, and the samples that are generated during each time period alternate between samples in one of the sequences and samples in other of the sequences. As illustrated in the second diagram 204, the audio signal is partitioned by frequency range and is represented by a first sequence of subband samples (e.g., low band, or "L") and a second sequence of subband samples (e.g., high band, or "H"). However, in other implementations, the audio signal can be partitioned in other ways, such as partitioned into even/odd samples, or partitioned into left/right samples of a stereo signal, as illustrative, non-limiting examples.

During the first time period T1 162, the first processing unit 130 initiates processing of a subband sample ${s}_{t}^{\left(H\right)}$ 271, where the "*t*" subscript and the *"H"* superscript indicate that the subband sample corresponds to the *t*^{th} sample of the second sequence of high band samples. Prior to the first time period T1 162, the first processing unit 130 was initialized via an initialization 245 that may include data values corresponding to a previously generated high band sample (e.g., ${s}_{t - 1}^{\left(H\right)}$, not shown). The first processing unit 130 generates an output 236 that includes information regarding a probability distribution of a residual ${e}_{t}^{\left(H\right)}$ for the subband sample ${s}_{t}^{\left(H\right)}$ 271, such as $log P \left({e}_{t}^{\left(H\right)}\right)$, in a similar manner as described in the first diagram 202.

Also during the first time period T1 162, the second processing unit 140 processes an output 235 from the first processing unit 130. The output 235 corresponds to information regarding a probability distribution of a residual ${e}_{t - 1}^{\left(L\right)}$ for a subband sample ${s}_{t - 1}^{\left(L\right)}$ 270, such as $log P \left({e}_{t - 1}^{\left(L\right)}\right)$, where the "*t*-1" subscript and the *"L"* superscript indicate that the sample corresponds to the (*t*-1)^{st} sample of the first sequence of low band samples. During the first time period T1 162, the second processing unit 140 generates the subband sample ${s}_{t - 1}^{\left(L\right)}$ 270 and also performs an initialization 246 to prepare the first processing unit 130 for processing a next subband sample ${s}_{t}^{\left(L\right)}$ 272 of the first sequence of low band samples.

During the second time period T2 164, the first processing unit 130 initiates processing of the subband sample ${s}_{t}^{\left(L\right)}$ 272. The first processing unit 130 generates an output 237 that includes information regarding a probability distribution of a residual ${e}_{t}^{\left(L\right)}$ for the subband sample ${s}_{t}^{\left(L\right)}$ 272, such as $log P \left({e}_{t}^{\left(L\right)}\right)$. Also during the second time period T2 164, the second processing unit 140 processes the previous output 236 from the first processing unit 130, generates the subband sample ${s}_{t}^{\left(H\right)}$ 271, and performs an initialization 247 to prepare the first processing unit 130 for processing a next subband sample ${s}_{t + 1}^{\left(H\right)}$ (not shown) of the second sequence of high band samples.

During the third time period T3 166, the first processing unit 130 initiates processing of the subband sample ${s}_{t + 1}^{\left(H\right)}$. The first processing unit 130 generates an output 238 that includes information regarding a probability distribution of a residual ${e}_{t + 1}^{\left(H\right)}$ for the subband sample ${s}_{t + 1}^{\left(H\right)}$, such as log $P \left({e}_{t + 1}^{\left(H\right)}\right)$. Also during the third time period T3 166, the second processing unit 140 processes the previous output 237 from the first processing unit 130, generates the subband sample ${s}_{t}^{\left(L\right)}$ 272, and performs an initialization 248 to prepare the first processing unit 130 for processing a next subband sample ${s}_{t + 1}^{\left(L\right)}$ (not shown) of the first sequence of low band samples.

As compared to the sequential processing of the first diagram 202, the parallel processing of the second diagram 204 enables the first processing unit 130 to be utilized during every time period. In addition, because the second processing unit 140 initializes the first processing unit 130 for a next sample (e.g., by populating an input queue of the first processing unit 130) while processing of a current sample is ongoing at the first processing unit 130, the offloading overhead associated with preparing the first processing unit 130 to process the next sample is masked. As a result, the first processing unit 130 can operate in a continuous (or nearly continuous) manner, avoiding the delay associated with the initialization 226 in the sequential processing of the first diagram 202. Further, because neural network processing of subband samples has reduced complexity as compared to processing of full band samples, a length of time to process each subband sample at the first processing unit 130 in the second diagram 204 can be reduced as compared to in the first diagram 202 (e.g., each time period T1-T3 is shorter in the second diagram 204), enabling a throughput of two subband samples (that can be combined into one full band sample, as described in FIG. 3) within the 62 microsecond period associated with a 16 kHz audio signal.

FIG. 3 depicts an illustrative implementation 300 of components of the system 100 of FIG. 1 and a diagram 350 illustrating an example of sample generation using pipelined processing units, in accordance with some examples of the present disclosure. Although an example of operation is described in with reference to generating audio samples, it should be understood that in other implementations other types of samples (e.g., video samples) may instead be generated.

In the implementation 300, the first processing unit 130 of FIG. 1 includes a neural processing unit (NPU) 330, and the second processing unit 140 of FIG. 1 includes a digital signal processor (DSP) 340. In an example, the NPU 330 is configured to perform operations on large sets of data in parallel by including a wide multiplier-accumulator (MAC) architecture (as compared to the DSP 340) that enables the NPU 330 to efficiently handle heavy neural workloads of vector and matrix multiplications that are associated with GRU layers and fully connected layers. The DSP 340 is configured to operate on smaller vectors than the NPU 330 and to perform other types of operations, such as softmax, sampling, and linear filtering, more efficiently than can be performed by the NPU 330.

The NPU 330 is configured to perform the first stage 152. In some implementations, the NPU 330 includes the neural network 132, and the neural network 132 can include the GRU-A 210, the GRU-B 212, and the dual-FC 214 of FIG. 2. The NPU 330 also includes an input queue 332 configured to receive and store input data 334 from the DSP 340.

The DSP 340 is configured to implement the second stage 154, such as by performing the softmax operation 220, the sampling operation 222, and the LPC operation 224 of FIG. 2. The DSP 340 is also configured to populate the input queue 332 of the NPU 330, while the NPU 330 is processing a first iteration of the first stage 152, to initialize a second iteration of the first stage 152 to be performed at the NPU 330. As an illustrative example, the DSP 340 is configured to perform one or more of the initializations 245-248 illustrated in FIG. 2, at least in part, by populating the input queue 332 with the input data 334 that is generated during the second stage 154.

The sample synthesizer 110 is configured to cause the NPU 330 and the DSP 340 to alternate, on a sample-by-sample basis, between generation of samples of a first sequence 342 of audio samples and generation of samples of a second sequence 343 of audio samples. The first sequence 342 of audio samples includes first subband audio samples corresponding to a first frequency band (e.g., a low band) of the output data 124, and the second sequence 343 of audio samples includes second subband audio samples corresponding to a second frequency band (e.g., a high band) of the output data 124.

As illustrated in the diagram 350, the NPU 330 and the DSP 340 operate in a pipelined configuration in an analogous manner as described for the first processing unit 130 and the second processing unit 140, respectively, in the second diagram 204 of FIG. 2. In particular, a first low band sample (LB-1) 360 is generated based on processing at the NPU 330 during a time period T1 and processing at the DSP 340 during a time period T2. A first high band sample (HB-1) 362 is generated based on processing at the NPU 330 during the time period T2 and processing at the DSP 340 during a time period T3. A second low band sample (LB-2) 364 is generated based on processing at the NPU 330 during the time period T3 and processing at the DSP 340 during a time period T4. A second high band sample (HB-2) 366 is generated based on processing at the NPU 330 during the time period T4 and processing at the DSP 340 during a time period T5.

In addition, as illustrated by arrows from the DSP 340 to the NPU 330 in the diagram 350, after generating each subband sample (e.g., the first low band sample (LB-1) 360 or the second low band sample (LB-2) 364, or the first high band sample (HB-1) 362 or the second high band sample (HB-2) 366), the DSP 340 initializes the NPU 330 to generate the next subband sample of that particular subband. For example, after generating the first low band sample (LB-1) 360 during the time period T2, the DSP 340 also initializes the NPU 330, during the time period T2, so that the NPU 330 can begin processing for the next low band sample (LB-2) 364 without substantial delay in the next time period T3. As another example, after generating the first high band sample (HB-1) 362 during the time period T3, the DSP 340 also initializes the NPU 330, during the time period T3, so that the NPU 330 can begin processing for the next high band sample (HB-2) 366 without substantial delay in the next time period T4.

The sample synthesizer 110 includes, or is coupled to, a reconstructor 344 that is configured to generate an audio sample of the output data 124 based on at least a first subband audio sample corresponding to the first frequency band and a second subband audio sample corresponding to the second frequency band. For example, as illustrated in the diagram 350, the reconstructor 344 generates a first audio sample 370 based on the first low band sample (LB-1) 360 and the first high band sample (HB-1) 362 and generates a second audio sample 372 based on the second low band sample (LB-2) 364 and the second high band sample (HB-2) 366. The audio samples 370 and 372 are sequential samples of a set of reconstructed audio signal samples 346 within the output data 124.

In a particular aspect, the reconstructor 344 includes a synthesis filterbank 348 (e.g., a subband reconstruction filterbank), such as a quadrature mirror filter (QMF), a pseudo QMF, a Gabor filterbank, etc. In some implementations, the reconstructor 344 can perform subband processing that is either critically sampled or oversampled. Oversampling enables transfer ripple vs aliasing operating points that are not possible to achieve with critical sampling. For example, for a particular transfer ripple specification, a critically sampled filterbank can limit aliasing to at most a particular threshold level, but an oversampled filterbank could decrease aliasing further while maintaining the same transfer ripple specification. Oversampling reduces some burden in terms of trying to match aliasing components across audio subbands with precision to achieve aliasing cancellation. Even if aliasing components do not match precisely and the aliasing does not exactly cancel, the final output quality of the reconstructed audio sample (e.g., the samples 370 and 372) is likely to be acceptable if aliasing within each subband is relatively low to begin with.

In some implementations, the neural network 132 processes the first subband audio samples (e.g., the first low band sample (LB-1) 360 and the second low band sample (LB-2) 364) and the second subband audio samples (e.g., the first high band sample (HB-1) 362 and the second high band sample (HB-2) 366) using a single network configuration. However, in other implementations, the first subband audio samples are processed according to a first configuration 310 of the neural network 132 and the second subband audio samples are processed according to a second configuration 312 of the neural network 132. Thus, in some examples, the sample synthesizer 110 can share states of the GRU-A 210, GRU-B 212, and dual-FC 214 of FIG. 2, or may use one set of states of the GRU-A 210, GRU-B 212, and dual-FC 214 for low band processing and an independent set of states of the GRU-A 210, GRU-B 212, and dual-FC 214 for high band processing.

Because an audio signal may exhibit local dependencies between sequential time samples of the audio signal and also between frequency bands, such local dependencies may be "broken" due to the parallel processing paths used to create the first sequence 342 of audio samples and the second sequence 343 of audio samples. In some implementations, such as the implementation 300, an effect of breaking such local dependencies across frequency subbands (while preserving local dependencies across time within each frequency subband) is reduced as compared to breaking such local dependencies across sequential time samples (while preserving local dependencies across frequency subbands).

Partitioning the audio signal by frequency band rather than by time also enables the sample synthesizer 110 to implement techniques such as emphasizing an importance of a low band loss over the importance of a high band loss when training the neural network 132. Because reproduction errors in lower frequency bands are generally more perceptible than reproduction errors in higher frequency bands, emphasizing low band loss over high band loss during training of the neural network 132 results in a perceived higher overall quality of the reproduced audio signal during playback of the output data 124. In some implementations, cross band mixing may be provided by sharing GRU states between low band processing and high band processing, or keeping states independent but combining across bands externally (e.g., via a dilated convolutional layer) for input to the GRU layers, as illustrative, non-limiting examples.

Although the diagram 350 illustrates pipeline processing using equally-sized time periods (e.g., as synchronized by a pipeline clock), in other implementations, the time periods may have varying sizes. For example, there may be DSP-to-NPU communication in the form of interrupts, flipping control bits, etc. Similarly, the NPU 330 may communicate an interrupt to the DSP 340 to inform the DSP 340 about process completion at the NPU 330.

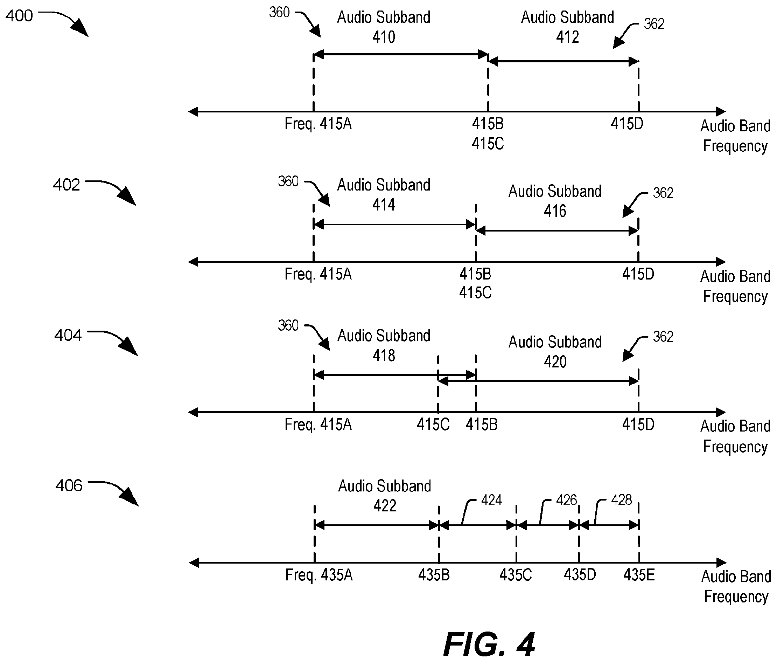

FIG. 4 depicts illustrative examples of audio subbands corresponding to sample data that may be generated by the system of FIG. 1. The examples depict frequency ranges associated with frequency bands of the output data 124, such as a first audio subband (e.g., a low band) associated with the first sequence 342 of audio samples and a second audio subband (e.g., a high band) associated with the second sequence 343 of audio samples of FIG. 3.

A first diagram 400 depicts a first example in which a first frequency band, illustrated as an audio subband 410 associated with the first low band sample (LB-1) 360 of FIG. 3, extends from a frequency 415A to a frequency 415B. A second frequency band, illustrated as an audio subband 412 associated with the first high band sample (HB-1) 362 of FIG. 3, extends from a frequency 415C to a frequency 415D. A first range of frequencies associated with the first frequency band is wider than a second range of frequencies associated with the second frequency band. In addition, the frequency bands are consecutive (e.g., the highest frequency 415B of the audio subband 410 matches the lowest frequency 415C of the audio subband 412).

A second diagram 402 depicts a second example in which a first frequency band, illustrated as an audio subband 414 associated with the first low band sample (LB-1) 360, extends from the frequency 415A to the frequency 415B. A second frequency band, illustrated as an audio subband 416 associated with the first high band sample (HB-1) 362, extends from a frequency 415C to a frequency 415D. A first range of frequencies associated with the first frequency band has a same width as a second range of frequencies associated with the second frequency band. In addition, the frequency bands are consecutive (e.g., the highest frequency 415B of the audio subband 414 matches the lowest frequency 415C of the audio subband 416).

A third diagram 404 depicts a third example in which a first frequency band, illustrated as an audio subband 418 associated with the first low band sample (LB-1) 360, extends from the frequency 415A to the frequency 415B. A second frequency band, illustrated as an audio subband 420 associated with the first high band sample (HB-1) 362, extends from a frequency 415C to a frequency 415D. A first range of frequencies associated with the first frequency band partially overlaps a second range of frequencies associated with the second frequency band. To illustrate, the highest frequency 415B of the audio subband 418 is between the lowest frequency 415C and the highest frequency 415D of the audio subband 420, and the lowest frequency 415C of the audio subband 420 is between the lowest frequency 415A and the highest frequency 415B of the audio subband 418. In addition, the first range of frequencies associated with the first frequency band is smaller than the second range of frequencies associated with the second frequency band.

Although three particular examples are depicted, it should be understood that in other implementations, a first audio subband may be consecutive to, non-consecutive to, non-overlapping, or partially overlapping with a second audio subband. In addition, a first range of frequencies associated with the first audio subband may be greater than, less than, or the same as a second range of frequencies associated with the second audio subband. In addition, although the diagrams 400, 402, and 404 each illustrate two audio subbands, in other implementations, any number of subbands can be used to generate each sample of the output data 124.

To illustrate, a fourth diagram 406 depicts a fourth example in which four frequency bands correspond to audio subbands of sample data that may be generated by the system of FIG. 1. A first audio subband 422 is associated with a first sequence of audio samples and extends from a first frequency 435A to a second frequency 435B. A second audio subband 424 is associated with a second sequence of audio samples and extends from the second frequency 435B to a third frequency 435C. A third audio subband 426 is associated with a third sequence of audio samples and extends from the third frequency 435C to a fourth frequency 435D. A fourth audio subband 428 is associated with a fourth sequence of audio samples and extends from the fourth frequency 435D to a fifth frequency 435E.

For example, the system illustrated in FIG. 3 may be configured to generate four sequences of audio samples, and the reconstructor 344 may be configured to generate each of the samples of the output data 124 by combining one subband sample from each of the four generated sequences of audio samples. To illustrate, the first audio subband 422 may be associated with the first sequence 342 of audio samples, the second audio subband 424 may be associated with the second sequence 343 of audio samples, the third audio subband 426 may be associated with a third sequence of audio samples, and the fourth audio subband 428 may be associated with a fourth sequence of audio samples.

In an illustrative example, the NPU 330 of FIG. 3 performs first stage processing for a first subband sample (associated with the first audio subband 422) during the first time period T1, performs first stage processing for a second subband sample (associated with the second audio subband 424) during the second time period T2, performs first stage processing for a third subband sample (associated with the third audio subband 426) during the third time period T3, and performs first stage processing for a fourth subband sample (associated with the fourth audio subband 428) during the fourth time period T4. The DSP 340 performs second stage processing and outputs the first subband sample, the second subband sample, the third subband sample, and the fourth subband sample during the second time period T2, the third time period T3, the fourth time period T4, and the fifth time period T5, respectively. The reconstructor 344 (e.g., the synthesis filterbank 348) combines the first subband sample, the second subband sample, the third subband sample, and the fourth subband sample to generate one sample of the output data 124.

In another example, the NPU 330 of FIG. 3 performs first stage processing for a first subband sample (associated with the first audio subband 422) and second subband sample (associated with the second audio subband 424) during the first time period T1, performs first stage processing for a third subband sample (associated with the third audio subband 426) and fourth subband sample (associated with the fourth audio subband 428) during the second time period T2. The DSP 340 performs second stage processing and outputs the first subband sample and the second subband sample during the second time period T2, and the third subband sample and the fourth subband sample during time period T3. The reconstructor 344 (e.g., the synthesis filterbank 348) combines the first subband sample, the second subband sample, the third subband sample, and the fourth subband sample to generate one sample of the output data 124.

Although the audio subbands 422-428 are illustrated as having varying widths, in other implementations two or more, or all, of the audio subbands 422-428 may have a same width. Although the audio subbands 422-428 are illustrated as consecutive, non-overlapping frequency ranges, in other implementations two or more of the audio subbands 422-428 may be partially overlapping, two or more adjacent audio subbands of the audio subbands 422-428 may be non-consecutive, or a combination thereof.

FIGs. 5-7 depict additional examples of implementations of the first processing unit 130 and the second processing unit 140 of FIG. 1, as alternatives to the NPU 330 and the DSP 340 of FIG. 3. According to some aspects, the sample synthesizer 110 of FIG. 1 is implemented via hardware multithreading, such as in single core or multi-core central processing units (CPUs) or DSPs, as non-limiting examples. To illustrate the NPU 330 may represent a processing block that is launched via a first thread, and the DSP 340 may represent a processing block that is launched via a second thread (e.g., on the same processor core or a different processor core as the first thread).

FIG. 5 depicts an example 500 in which the first processing unit 130 includes (e.g., corresponds to) a graphics processing unit (GPU) 530 that is configured to perform the first stage 152. The second processing unit 140 includes (e.g., corresponds to) a CPU 540 that is configured to perform the second stage 154. In a particular aspect, the GPU 530 implements the neural network 132. In other implementations, the neural network 132 is implemented by the CPU 540, the neural network 132 is distributed across the GPU 530 and the CPU 540, or the neural network 132 is omitted.

FIG. 6 depicts an example 600 in which the first processing unit 130 includes (e.g., corresponds to) a first core 630 of a CPU 602. The first core 630 is configured to perform the first stage 152. The second processing unit 140 includes (e.g., corresponds to) a second core 640 of the CPU 602 and is configured to perform the second stage 154. In some implementations, the first core 630 implements the neural network 132. In other implementations, the neural network 132 is implemented by the second core 640, the neural network 132 is distributed across the first core 630 and the second core 640, or the neural network 132 is omitted.

FIG. 7 depicts an example 700 in which the first processing unit 130 corresponds to a first thread 730 of a core 702 of a CPU, and the second processing unit 140 corresponds to a second thread 740 of the core 702. To illustrate, the CPU core 702 is configured to execute multiple threads, including the first thread 730, the second thread 740, and one or more additional threads including an Nth thread 742 (where N is an integer greater than 2). The CPU core 702 includes a scheduler 710 that is configured to schedule threads of the multiple threads 730-742 to multiple execution units, including an execution unit (X-Unit) 720, an execution unit (X-Unit) 722, and an execution unit (X-Unit) 724. The execution units 720-724 are coupled to a register file 750, and the register file 750 is coupled to a cache 760.

In a particular implementation, the scheduler 710 is configured to schedule execution of the first thread 730 (e.g., operations associated with the first stage 152) at one or more of the execution units 720-724 and execution of the second thread 732 (e.g., operations associated with the second stage 154) at another one or more of the execution units 720-724 in a manner that enables pipelining of the first stage 152 and the second stage 154. In an illustrative, non-limiting example, the CPU core 702 has a very long instruction word (VLIW) configuration that supports parallel execution, at the execution units 720-724, of multiple instructions in an instruction packet. Although three threads 730-742 and three execution units 720-724 are illustrated, in other implementations the CPU core 702 may support any number (e.g., 2 or more) of threads and may include any number (e.g., 2 or more) of execution units.

Although FIG. 3, FIG. 5, FIG. 6, and FIG. 7 illustrate four distinct implementations of the first processing unit 130 and the second processing unit 140 of the sample synthesizer 110 of FIG. 1, such implementations are provided for purpose of illustration and should not be construed as limiting. In general, the first processing unit 130 may be implemented at a processor, core, or thread "A1," with process launch overhead "O1" and capability (e.g., multiply-accumulate operations per milliwatt (MACS/mW)) "C1," and the second processing unit 140 may be implemented at a processor, core, or thread "A2," with process launch overhead "O2" and capability "C2." In an implementation in which A1 is a NPU and A2 is a DSP (e.g., FIG. 3); O1 is relatively high, and C1>C2. In an implementation in which A1 is a CPU and A2 is a GPU (e.g., FIG. 5), O2 is relatively high, and C2>C1. In an implementation that includes multi-threading across CPU cores for improved multi-core utilization (e.g., FIG. 6), A1 is a first CPU core, A2 is a second CPU core, O1 and O2 are relatively low and have similar values, and C1 may substantially equal C2. In an implementation that includes multiple threads within a single core for improved single core utilization (e.g., FIG. 7), A1 is a first thread of the CPU core, A2 is a second thread of the CPU core, O1 and O2 are relatively low and have similar values, and C1 may substantially equal C2.

Because serial processing in a single thread may not use all the computing resources of the CPU core, partitioning the audio sample synthesis to enable pipelined processing enables a processer to load up multiple threads to better utilize idle CPU resources. Also, if a thread encounters a relatively large number of cache misses, the other threads can continue taking advantage of the unused computing resources, which may lead to faster overall execution, as these resources would have been idle if only a single thread were executed.

FIGs. 8-10 depicts illustrative examples of sequences of samples that may be generated by the system 100 of FIG. 1, such as the first sequence 342 of audio samples and the second sequence 343 of audio samples of FIG. 3. As illustrated, generation of samples alternates between the first sequence 342 and the second sequence 343 in a similar manner as described with reference to FIG. 3.

FIG. 8 depicts an example 800 of partitioning by frequency in which the first sequence 342 includes first subband samples corresponding to a first frequency band of the output data 124 and the second sequence 343 includes second subband samples corresponding to a second frequency band of the output data 124. For example, the first sequence 342 includes a first low band sample 810 of a first audio sample of the output data 124, a second low band sample 814 of a second audio sample of the output data 124, and a third low band sample 818 of a third audio sample of the output data 124. The second sequence 343 includes a first high band sample 812 of the first audio sample, a second high band sample 816 of the second audio sample, and a third high band sample 820 of the third audio sample.

FIG. 9 depicts an example 900 of partitioning by time in which the first sequence 342 corresponds to odd-numbered samples of the output data 124 and the second sequence 343 corresponds to even-numbered samples of the output data 124. For example, the first sequence 342 includes a first sample 910, a third sample 914, and a fifth sample 918 of the output data 124. The second sequence 343 includes a second sample 912, a fourth sample 916, and a sixth sample 920 of the output data 124.

FIG. 10 depicts an example 1000 of partitioning by channel in which the input data 122 corresponds to multi-channel data that includes a first signal (e.g., corresponding to a left channel of stereo audio data) and a second signal (e.g., corresponding to a right channel of the stereo audio data). The first sequence 342 corresponds to the first signal and includes a first sample 1010, a second sample 1014, and a third sample 1018 of the first signal. The second sequence 343 corresponds to the second signal and includes a first sample 1012, a second sample 1016, and a third sample 1020 of the second signal.

Although FIGs. 8-10 depict generation of samples alternating between the first sequence 342 and the second sequence 343, in other implementations, generation of samples may cycle between samples of three or more sequences, such as in a similar manner as described with reference to the fourth diagram 406 of FIG. 4.

Referring to FIG. 11, a diagram of an illustrative aspect of a system 1100 operable to generate a reconstructed audio sample using pipelined processing units is shown. The system 1100 includes a device 1102 configured to communicate with the device 102. The device 1102 includes an encoder 1104 coupled via a modem 1106 to a transmitter 1108. The device 102 includes a receiver 1138 coupled via a modem 1140 to an audio decoder, illustrated as a feedback recurrent autoencoder (FRAE) decoder 1142. The sample synthesizer 110 includes a frame rate network 1150 coupled to a sample generator 1160. The FRAE decoder 1142 is coupled to the frame rate network 1150.

In some aspects, the encoder 1104 of the device 1102 uses an audio coding algorithm to process an audio signal 1105. The audio signal 1105 can include a speech signal, a music signal, another type of audio signal, or a combination thereof. In some implementations, the audio signal 1105 is captured by one or more microphones, converted from an analog signal to a digital signal by an analog-to-digital converter, and compressed by the encoder 1104 to generate encoded audio data 1122 for transmission via the modem 1106 and the transmitter 1108.

The audio signal 1105 can be divided into blocks of samples, where each block is referred to as a frame. For example, the audio signal 1105 includes a sequence of audio frames, such as an audio frame (AF) 1103A, an audio frame 1103B, an audio frame 1103N, one or more additional audio frames, or a combination thereof. In some examples, each of the audio frames 1103A-1103N represents audio corresponding to 10-20 milliseconds (ms) of playback time, and each of the audio frames 1103A-1103N includes about 160 audio samples, such as a representative audio sample (AS) 1107 in the audio frame 1103A.

For example, the audio signal 1105 can include a digitized audio signal. In some implementations, the digitized audio signal is generated using a filter to eliminate aliasing, a sampler to convert to discrete-time, and an analog-to-digital converter for converting an analog signal to the digital domain. The resulting digitized audio signal is a discrete-time audio signal with samples that are also discretized. Using the audio coding algorithm, the encoder 1104 can generate a compressed audio signal that represents the audio signal 1105 using as few bits as possible, while attempting to maintain a certain quality level for audio. The audio coding algorithm can include a linear prediction coding algorithm (e.g., Code Excited Linear Prediction (CELP), Algebraic Code Excited Linear Prediction (ACELP), or other linear prediction technique) or other voice coding algorithm.

As an example, the encoder 1104 uses an audio coding algorithm to encode the audio frame 1103A of the audio signal 1105 to generate the encoded audio data 1122 (e.g., the input data 122) of the compressed audio signal. The modem 1106 initiates transmission of the compressed audio signal (e.g., the encoded audio data 1122) via the transmitter 1108. The modem 1140 of the device 102 is configured to receive the compressed audio signal (e.g., the encoded audio data 1122) from the device 1102 via the receiver 1138, and to provide the compressed audio signal (e.g., the encoded audio data 1122) to the FRAE decoder 1142.

The FRAE decoder 1142 is configured to decode the encoded audio data 1122 to generate feature data 1143 by extracting features representing the audio signal 1105 and to provide the feature data 1143 to the sample synthesizer 110 to generate a reconstructed audio signal 1171. For example, the FRAE decoder 1142 decodes the encoded audio data 1122 to generate feature data 1143 representing the audio frame 1103A and provides the feature data 1143 to the frame rate network 1150. In some implementations, the feature data 1143 (e.g., extracted features output by the FRAE decoder 1142) is input to at least one of the first processing unit 130 and the second processing unit 140 in the sample generator 1160, as described further with reference to FIGs. 12-13.

In some examples, the reconstructed audio signal 1171 corresponds to a reconstruction of the audio signal 1105. The reconstructed audio signal 1171 includes a reconstructed audio frame (RAF) 1153A, a reconstructed audio frame 1153B, and a reconstructed audio frame 1153N corresponding to audio frame 1103A, 1103B, and 1103N, respectively, of the audio signal 1105. For example, the reconstructed audio frame 1153A includes a representative reconstructed audio sample (RAS) 1167 that corresponds to a reconstruction (e.g., an estimation) of the representative audio sample 1107 of the audio frame 1103A. The sample synthesizer 110 is configured to generate the reconstructed audio frame 1153A based on the reconstructed audio sample 1167, one or more additional reconstructed audio samples, or a combination thereof (e.g., about 160 reconstructed audio samples including the reconstructed audio sample 1167).

In some implementations, the feature data 1143 generated by the FRAE decoder 1142 and provided to the frame rate network 1150 includes data related to or representing linear predictive coding (LPC) coefficients 1141, a pitch gain 1173, a pitch estimation 1175, or a combination thereof. Although the FRAE decoder 1142 is provided as an illustrative example of an audio decoder, in other examples, the one or more processors 190 can include any type of audio decoder that generates data representing the LPC coefficients 1141, the pitch gain 1173, the pitch estimation 1175, or a combination thereof, using a suitable audio coding algorithm, such as a linear prediction coding algorithm (e.g., Code-Excited Linear Prediction (CELP), algebraic CELP (ACELP), or other linear prediction technique), or another audio coding algorithm.

In some implementations, the feature data 1143 extracted from the encoded audio data 1122 does not explicitly include a particular feature, such as the LPC coefficients 1141, and the particular feature is estimated based on other features explicitly included in the feature data 1143. For example, in implementations in which the feature data 1143 does not explicitly include the LPC coefficients 1141 and includes a Bark cepstrum, the LPC coefficients 1141 are determined based on the Bark cepstrum. To illustrate, the LPC coefficients 1141 may be estimated by converting an 18-band Bark-frequency cepstrum into a linear-frequency spectral density (PSD), using an inverse Fast Fourier Transform (iFFT) to convert the PSD to an auto-correlation, and using the Levinson-Durbin algorithm on the auto-correlation to determine the LPC coefficients 1141. As another example, in implementations in which the feature data 1143 does not explicitly include the pitch estimation 1175 and includes a speech cepstrum of the audio frame 1103A, the frame rate network 1150 can determine the pitch estimation 1175 based on the speech cepstrum.

The feature data 1143 can include any set of features of the audio frame 1103 generated by the encoder 1104. In some implementations, the feature data 1143 can include quantized features. In other implementations, the feature data 1143 can include dequantized features. In a particular aspect, the feature data 1143 includes the LPC coefficients 1141, the pitch gain 1173, the pitch estimation 1175, pitch lag with fractional accuracy, the Bark cepstrum of a speech signal, the 18-band Bark-frequency cepstrum, an integer pitch period (or lag) (e.g., between 16 and 256 samples), a fractional pitch period (or lag), a pitch correlation (e.g., between 0 and 1), or a combination thereof. In some implementations, the feature data 1143 can include features for one or more (e.g., two) audio frames preceding the audio frame 1103A in the sequence of audio frames representing the audio signal 1105, the audio frame 1103A, one or more (e.g., two) audio frames subsequent to the audio frame 1103A in the sequence of audio frames representing the audio signal 1105, or a combination thereof.

In a particular implementation, the frame rate network 1150 includes a convolutional (conv.) layer 1170, a convolutional layer 1172, a fully connected (FC) layer 1176, and a fully connected layer 1178. The convolutional layer 1170 processes the feature data 1143 to generate an output that is provided to the convolutional layer 1172. In some cases, the convolutional layer 1170 and the convolutional layer 1172 include filters of the same size. For example, the convolutional layer 1170 and the convolutional layer 1172 can include a filter size of 3, resulting in a receptive field of five audio frames (e.g., features of two preceding audio frames, the audio frame 1103A, and two subsequent audio frames). The output of the convolutional layer 1172 is added to the feature data 1143 and is then processed by the fully connected layer 1176 to generate an output that is provided as input to the fully connected layer 1178. The fully connected layer 1178 processes the input to generate a conditioning vector 1151.

The frame rate network 1150 provides the conditioning vector 1151 to the sample generator 1160. In one illustrative example, the conditioning vector 1151 is a 128-dimensional vector. In some aspects, the conditioning vector 1151, the LPC coefficients 1141, the pitch gain 1173, the pitch estimation 1175, or a combination thereof, can be held constant for the duration of processing each audio frame. The sample synthesizer 110 generates the reconstructed audio frame 1153A based on the LPC coefficients 1141, the conditioning vector 1151, the pitch gain 1173, the pitch estimation 1175, or a combination thereof, as further described with reference to FIGS. 12-13.

Referring to FIG. 12, a diagram of an illustrative implementation of the sample generator 1160 is shown. The sample generator 1160 as shown includes a combiner 1254 coupled via the neural network 132 in the first stage 152 (e.g., implemented in the first processing unit 130) to a softmax layer 1286, a sampling layer 1288, and an LP module 1290 in the second stage 154 (e.g., implemented in the second processing unit 140). In a particular implementation, the softmax layer 1286 corresponds to the softmax operation 220, the sampling layer 1288 corresponds to the sampling operation 222, and the LP module 1290 corresponds to the LPC operation 224 of FIG. 2.

The neural network 132 includes a plurality of recurrent layers, illustrated as a first recurrent layer including a GRU 1256A, a second recurrent layer including a GRU 1256B, and a third recurrent layer including a GRU 1256C. The neural network 132 also include a feed forward layer that includes a fully connected (FC) layer, such as a FC layer 1284.

The combiner 1254 is coupled to the first recurrent layer (e.g., the GRU 1256A) of the plurality of recurrent layers, the GRU of each previous recurrent layer is coupled to the GRU of a subsequent recurrent layer, and the GRU of a last recurrent layer (e.g., the third recurrent layer) is coupled to the FC layer 1284. The neural network 132 including three recurrent layers is provided as an illustrative example. In other examples, the neural network 132 can include fewer than three or more than three recurrent layers. In some implementations, the neural network 132 may include one or more additional layers, one or more additional connections, or a combination thereof, that are not shown for ease of illustration. According to a particular aspect, the plurality of recurrent layers corresponds functionally to the GRU-A 210 and the GRU-B 212 of FIG. 2, and the FC layer 1284 corresponds to the dual fully connected layer 214 of FIG. 2.

The combiner 1254 is configured to process one or more neural network inputs 1251 to generate an embedding 1255. The one or more neural network inputs 1251 includes the conditioning vector 1151, previous sample data 1211, predicted audio data 1215, or a combination thereof. In a particular aspect, the previous sample data 1211 includes at least sample data generated by the LP module 1290 during one or more previous iterations and may also include residual data 1289 generated during the one or more previous iterations, as described further below. In a particular aspect, the predicted audio data 1215 includes predicted audio data (e.g., predicted audio data 1292, predicted audio data 1294, or both) generated by the LP module 1290 during one or more previous iterations. In an example in which the second processing unit 140 alternates between processing samples of the first sequence 342 of audio samples and samples of the second sequence 343 of audio samples, the previous sample data 1211 and the predicted audio data 1215 for a sample of the first sequence 342 (e.g., the second low band sample (LB-2) 364) are the sample data and predicted audio data generated from processing the prior sample of the first sequence 342 (e.g., the first low band sample (LB-1) 360). Similarly, the previous sample data 1211 and the predicted audio data 1215 for a sample of the second sequence 343 (e.g., the second high band sample (HB-2) 366) are the sample data and predicted audio data generated from processing the prior sample of the second sequence 343 (e.g., the first high band sample (HB-1) 362).

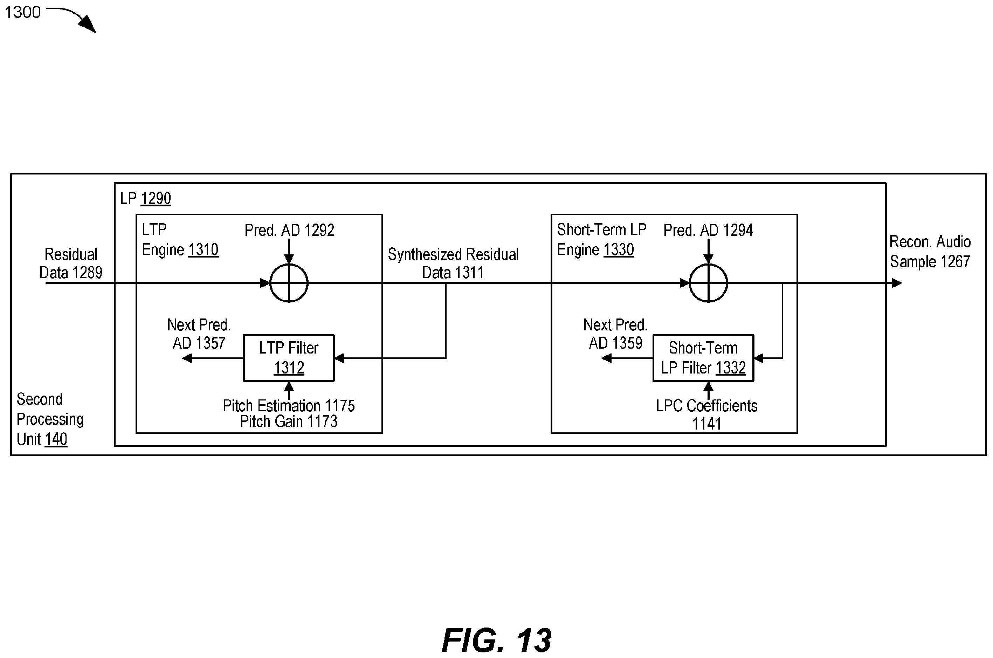

In some aspects, the LP module 1290 generates predicted audio data 1292 by applying long-term linear prediction to synthesized residual data based on the pitch gain 1173, the pitch estimation 1175, or both, as further described with reference to FIG. 13. In some aspects, the LP module 1290 generates predicted audio data 1294 by applying short-term linear prediction to the previous sample data 1211 based on the LPC coefficients 1141, as further described with reference to FIG. 13. The predicted audio data 1215 includes the predicted audio data 1292, the predicted audio data 1294, or both.

The plurality of recurrent layers of the neural network 132 is configured to process the embedding 1255. In some implementations, the GRU 1256A determines a first hidden state based on a previous first hidden state and the embedding 1255. The previous first hidden state is generated by the GRU 1256A during a previous iteration. The GRU 1256A outputs the first hidden state to the GRU 1256B. The GRU 1256B determines a second hidden state based on the first hidden state and a previous second hidden state. The previous second hidden state is generated by the GRU 1256B during the previous iteration. Each previous GRU outputs a hidden state to a subsequent GRU of the plurality of recurrent layers, and the subsequent GRU generates a hidden state based on the received hidden state and a previous hidden state. The GRU of the last recurrent layer (e.g., the GRU 1256C) outputs the hidden state to the FC layer 1284.

The FC layer 1284 is configured to process an output of the plurality of recurrent layers. In some implementations, the FC layer 1284 includes a dual FC layer in which outputs of two fully-connected layers of the FC layer 1284 are combined with an element-wise weighted sum to generate an output. The output of the FC layer 1284 is provided to the softmax layer 1286 to generate a probability distribution 1287. In a particular aspect, the probability distribution 1287 indicates probabilities of various values of residual data 1289.

In some examples, the one or more neural network inputs 1251 can be mu-law encoded and embedded using a network embedding layer of the combiner 1254 to generate the embedding 1255. For instance, the embedding 1255 can map (e.g., in an embedding matrix) each mu-law level to a vector, which may correspond to "learning" a set of non-linear functions to be applied to the mu-law value. The embedding matrix (e.g., the embedding 1255) can be sent to one or more of the plurality of recurrent layers (e.g., the GRU 1256A, the GRU 1256B, the GRU 1256C, or a combination thereof). For example, the embedding matrix (e.g., the embedding 1255) can be input to the GRU 1256A, the output of the GRU 1256A can be input to the GRU 1256B, and the output of the GRU 1256B can be input to the GRU 1256C. In another example, the embedding matrix (e.g., the embedding 1255) can be separately input to the GRU 1256A, to the GRU 1256B, to the GRU 1256C, or a combination thereof.

In some aspects, the product of an embedding matrix that is input to a GRU with a corresponding submatrix of the non-recurrent weights of the GRU can be computed. A transformation can be applied for all gates (e.g., update gate (u), reset gate (r), and hidden state (h)) of the GRU and all of the embedded inputs (e.g., the one or more neural network inputs 1251). In some cases, one or more of the one or more neural network inputs 1251 may not be embedded, such as the conditioning vector 1151. Using the previous sample data 1211 as an example of an embedded input, E can denote the embedding matrix and U^{(u,s)} can denote a submatrix of U⁽ⁿ⁾ including the columns that apply to the embedding of the previous sample data 1211, and a new embedding matrix V^{(u,s)}= U^{(u,s)}E can be derived that directly maps the previous sample data 1211 to the non-recurrent term of the update gate computation.

The output from the GRU 1256C, or outputs from the GRU 1256A, the GRU 1256B, and the GRU 1256C when the embedding matrix (e.g., the embedding 1255) is input separately to the GRU 1256A, to the GRU 1256B, and to the GRU 1256C, is provided to the FC layer 1284. In some examples, the FC layer 1284 can include two fully-connected layers combined with an element-wise weighted sum. Using the combined fully connected layers can enable computing the probability distribution 1287 without significantly increasing the size of the preceding layer. In one illustrative example, the FC layer 1284 can be defined as dual_fc(x)=a₁·tanh (W₁x)+a₂·tanh (W₂x), where W₁ and W₂ are weight matrices, a₁ and a₂ are weighting vectors, and tanh is the hyperbolic tangent function that generates a value between -1 and 1.

In some implementations, the output of the FC layer 1284 is used with a softmax activation of the softmax layer 1286 to compute the probability distribution 1287 representing probabilities of excitation values for the residual data 1289. The residual data 1289 can be quantized (e.g., 8-bit mu-law quantized). An 8-bit quantized value corresponds to a count of possible values (e.g., 2⁸ or 256 values). The probability distribution 1287 indicates a probability associated with each of the values of the residual data 1289. In some implementations, the output of the FC layer 1284 indicates mean values and a covariance matrix corresponding to the probability distribution 1287 (e.g., a normal distribution) of the value of the residual data 1289. In these implementations, the values of the residual data 1289 can correspond to real-values (e.g., dequantized values).

The residual data 1289 is provided to the LP module 1290, and the LP module 1290 generates a reconstructed audio sample 1267, which may correspond to the representative reconstructed audio sample 1167 of the reconstructed audio signal 1171. For example, the LP module 1290 generates a reconstructed audio sample 1267 (e.g., a subband sample as in FIG. 8, an even/odd sample as in FIG. 9, or a L/R sample as in FIG. 10) of the reconstructed audio signal 1171 based on the residual data 1289, the LPC coefficients 1141, the pitch gain 1173, the pitch estimation 1175, the predicted audio data 1292, the predicted audio data 1294, a previous reconstructed audio sample 1167 generated by the LP module 1290 during a previous iteration, or a combination thereof, as further described with reference to FIG. 13. In a particular aspect, the predicted audio data 1292 corresponds to predicted audio data (e.g., long term prediction (LTP) data) generated by a LTP engine of the LP module 1290 during a previous iteration. In a particular aspect, the predicted audio data 1294 corresponds to predicted audio data (e.g., short-term LP data) generated by a short-term LP engine of the LP module 1290 during the previous iteration.

The LP module 1290 generates next predicted audio data of the LTP engine and the short-term LP engine that may be included in the predicted audio data 1215 for a subsequent iteration (e.g., to generate a next sample of the first sequence 342 or to generate a next sample of the second sequence 343). In a particular aspect, the residual data 1289, the reconstructed audio sample 1267, an output of the LTP engine of the LP module 1290, an output of the short-term LP engine of the LP module 1290, or a combination thereof, are included in the previous sample data 1211 for the subsequent iteration.

Referring to FIG. 13, a diagram 1300 depicts an illustrative implementation of the LP module 1290 of the second processing unit 140 of FIG. 12. The LP module 1290 includes a LTP engine 1310 coupled to a short-term LP engine 1330. The LTP engine 1310 includes a LTP filter 1312, and the short-term LP engine 1330 includes a short-term LP filter 1332.

In a particular aspect, the residual data 1289 corresponds to an excitation signal, the predicted audio data 1292 and the predicted audio data 1294 correspond to a prediction, and the LP module 1290 is configured to combine the excitation signal (e.g., the residual data 1289) with the prediction (e.g., the predicted audio data 1292 and the predicted audio data 1294) to generate the reconstructed audio sample 1267. For example, the LTP engine 1310 combines the predicted audio data 1292 with the residual data 1289 to generate synthesized residual data 1311 (e.g., LP residual data). The short-term LP engine 1330 combines the synthesized residual data 1311 with the predicted audio data 1294 to generate the reconstructed audio sample 1267.

The LP module 1290 is configured to generate a prediction for a subsequent iteration. For example, the LTP filter 1312 generates next predicted audio data 1357 (e.g., next long-term predicted data) based on the synthesized residual data 1311, the pitch gain 1173, the pitch estimation 1175, or a combination thereof. In a particular aspect, the next predicted audio data 1357 is used as the predicted audio data 1292 in a subsequent iteration.

The short-term LP filter 1332 generates next predicted audio data 1359 (e.g., next short-term predicted data) based on the reconstructed audio sample 1267 and the LPC coefficients 1141. In a particular aspect, the next predicted audio data 1359 is used as the predicted audio data 1294 in the subsequent iteration.

In a particular aspect, the LP module 1290 outputs the previous sample data 1211 of FIG. 12 for the subsequent iteration. For example, the residual data 1289, the synthesized residual data 1311, the reconstructed audio sample 1267, or a combination thereof, may be included in the previous sample data 1211 for the subsequent iteration.

The diagram 1300 provides an illustrative non-limiting example of an implementation of the LP module 1290 of FIG. 12. In other examples, the LP module 1290 can have various other implementations. For example, in a particular implementation, the residual data 1289 is processed by the short-term LP engine 1330 prior to processing of an output of the short-term LP engine 1330 by the LTP engine 1310. In this implementation, an output of the LTP engine 1310 corresponds to the reconstructed audio sample 1267.

In some implementations, the LPC coefficients 1141, the pitch estimation 1175, and the pitch gain 1173, the conditioning vector 1151, or a combination thereof, have different values associated with different sequences of audio samples. For example, a first set of the LPC coefficients 1141, the pitch estimation 1175, the pitch gain 1173, and the conditioning vector 1151 may be used for generating the low band samples of the first sequence 342 of FIG. 8, and a second set of the LPC coefficients 1141, the pitch estimation 1175, the pitch gain 1173, and the conditioning vector 1151 may be used for generating the high band samples of the second sequence 343 of FIG. 8. As another example, a first set of the LPC coefficients 1141, the pitch estimation 1175, the pitch gain 1173, and the conditioning vector 1151 may be used for generating the left channel samples of the first sequence 342 of FIG. 10, and a second set of the LPC coefficients 1141, the pitch estimation 1175, the pitch gain 1173, and the conditioning vector 1151 may be used for generating the right channel samples of the second sequence 343 of FIG. 10.

FIG. 14 depicts an implementation 1400 of the device 102 as an integrated circuit 1402 that includes the one or more processors 190. The one or more processors 190 include the sample synthesizer 110. The integrated circuit 1402 also includes an input 1404, such as one or more bus interfaces, to enable the input data 122 to be received for processing. The integrated circuit 1002 also includes an output 1406, such as a bus interface, to enable sending of an output signal, such as the output data 124. The integrated circuit 1402 enables implementation of generating sample data using pipelined processing units as a component in a system, such as a mobile phone or tablet as depicted in FIG. 15, a headset as depicted in FIG. 16, a wearable electronic device as depicted in FIG. 17, a voice-controlled speaker system as depicted in FIG. 18, a camera as depicted in FIG. 19, a virtual reality, mixed reality, or augmented reality headset as depicted in FIG. 20, or a vehicle as depicted in FIG. 21 or FIG. 22.

FIG. 15 depicts an implementation 1500 in which the device 102 includes a mobile device 1502, such as a phone or tablet, as illustrative, non-limiting examples. The mobile device 1502 includes a display screen 1504. Components of the one or more processors 190, including the sample synthesizer 110, are integrated in the mobile device 1502 and are illustrated using dashed lines to indicate internal components that are not generally visible to a user of the mobile device 1502. In a particular example, the sample synthesizer 110 operates to generate audio data as the output data 124, which may be played out via the speaker 136. In another example, the output data 124 is processed to perform one or more operations at the mobile device 1502, such as to launch a graphical user interface or otherwise display, at the display screen 1504, other information associated with speech detected in the output data 124 (e.g., via an integrated "smart assistant" application). In a particular example, the sample synthesizer 110 operates to generate image data as the output data 124, which may be played out via the display screen 1504.

FIG. 16 depicts an implementation 1600 in which the device 102 includes a headset device 1602. Components of the one or more processors 190, including the sample synthesizer 110, are integrated in the headset device 1602. In a particular example, the sample synthesizer 110 operates to generate the output data 124, which may cause the headset device 1602 to output a reconstructed audio signal via one or more speakers 136, to perform one or more operations at the headset device 1602, to transmit audio data corresponding to voice activity detected in the output data 124 to a second device (not shown), for further processing, or a combination thereof.

FIG. 17 depicts an implementation 1700 in which the device 102 includes a wearable electronic device 1702, illustrated as a "smart watch." The sample synthesizer 110 is integrated into the wearable electronic device 1702. In a particular example, the sample synthesizer 110 operates to output data 124. In some implementations, the wearable electronic device 1702 outputs a reconstructed audio signal based on the output data 124 via one or more speakers 136. In some implementations, the output data 124 is processed to perform one or more operations at the wearable electronic device 1702, such as to launch a graphical user interface or otherwise display other information (e.g., a song title, an artist name, etc.) associated with audio detected in the output data 124 at a display screen 1704 of the wearable electronic device 1702. To illustrate, the wearable electronic device 1702 may include a display screen 1704 that is configured to display a notification based on the audio detected by the wearable electronic device 1702. In a particular example, the sample synthesizer 110 operates to generate image data as the output data 124, which may be played out via the display screen 1704.

In a particular example, the wearable electronic device 1702 includes a haptic device that provides a haptic notification (e.g., vibrates) in response to detection of audio, display of an image, or both. For example, the haptic notification can cause a user to look at the wearable electronic device 1702 to see a displayed image, a displayed notification indicating information (e.g., a song title, an artist name, etc.) associated with the audio, or both.

FIG. 18 is an implementation 1800 in which the device 102 includes a wireless speaker and voice activated device 1802. The wireless speaker and voice activated device 1802 can have wireless network connectivity and is configured to execute an assistant operation. The one or more processors 190 including the sample synthesizer 110 are included in the wireless speaker and voice activated device 1802. The wireless speaker and voice activated device 1802 also includes a speaker 136. During operation, the wireless speaker and voice activated device 1802 outputs, via the speaker 136, a reconstructed audio signal based on the output data 124 generated via operation of the sample synthesizer 110. In some implementations, the wireless speaker and voice activated device 1802, in response to a verbal command identified as user speech in the output data 124, can execute assistant operations, such as via execution of an integrated assistant application. The assistant operations can include adjusting a temperature, playing music, turning on lights, etc. For example, the assistant operations are performed responsive to detecting a command after a keyword or key phrase (e.g., "hello assistant").

FIG. 19 depicts an implementation 1900 in which the device 102 includes a portable electronic device that corresponds to a camera device 1902. The sample synthesizer 110 is included in the camera device 1902. During operation, the camera device 1902 may generate a reconstructed audio signal based on the output data 124, which may be played out via a speaker 136. In some implementations, in response to detecting a verbal command identified in the output data 124 generated via operation of the sample synthesizer 110, the camera device 1902 can execute operations responsive to verbal commands, such as to adjust image or video capture settings, image or video playback settings, or image or video capture instructions, as illustrative examples.

FIG. 20 depicts an implementation 2000 in which the device 102 includes a portable electronic device that corresponds to a virtual reality, mixed reality, or augmented reality headset 2002. The sample synthesizer 110 is integrated into the headset 2002. In a particular aspect, the headset 2002 outputs, via a visual interface device, a reconstructed video signal based on the output data 124 generated via operation of the sample synthesizer 110. In another particular aspect, the headset 2002 outputs, via one or more speakers 136, a reconstructed audio signal based on the output data 124 generated via operation of the sample synthesizer 110. In some implementations, voice activity detection can be performed based on the output data 124. The visual interface device is positioned in front of the user's eyes to enable display of augmented reality, mixed reality, or virtual reality images or scenes to the user while the headset 2002 is worn. In a particular example, the visual interface device is configured to display a notification indicating audio detected in the output data 124.

FIG. 21 depicts an implementation 2100 in which the device 102 corresponds to, or is integrated within, a vehicle 2102, illustrated as a manned or unmanned aerial device (e.g., a package delivery drone). The sample synthesizer 110 is integrated into the vehicle 2102. The vehicle 2102 outputs, via one or more speakers 136, a reconstructed audio signal based on the output data 124 generated via operation of the sample synthesizer 110, such as for assembly instructions or installation instructions for a package recipient. In a particular aspect, the vehicle 2102 outputs, via a display device, an image or video based on the output data 124 generated via operation of the sample synthesizer 110, such as for the assembly instructions or the installation instructions.

FIG. 22 depicts another implementation 2200 in which the device 102 corresponds to, or is integrated within, a vehicle 2202, illustrated as a car. The vehicle 2202 includes the one or more processors 190 including the sample synthesizer 110. In some implementations, speech recognition can be performed based on the output data 124 generated via operation of the sample synthesizer 110. In a particular implementation, the vehicle 2202 outputs, via one or more speakers 136, a synthesized audio signal based on the output data 124 generated via operation of the sample synthesizer 110. In an illustrative example, the output data 124 corresponds to an audio signal received during a phone call with another device. In another example, the output data 124 corresponds to an audio signal output by an entertainment system of the vehicle 2202. In some examples, the vehicle 2202 provides, via a display 2220, information (e.g., caller identification, song title, etc.) associated with the output data 124.

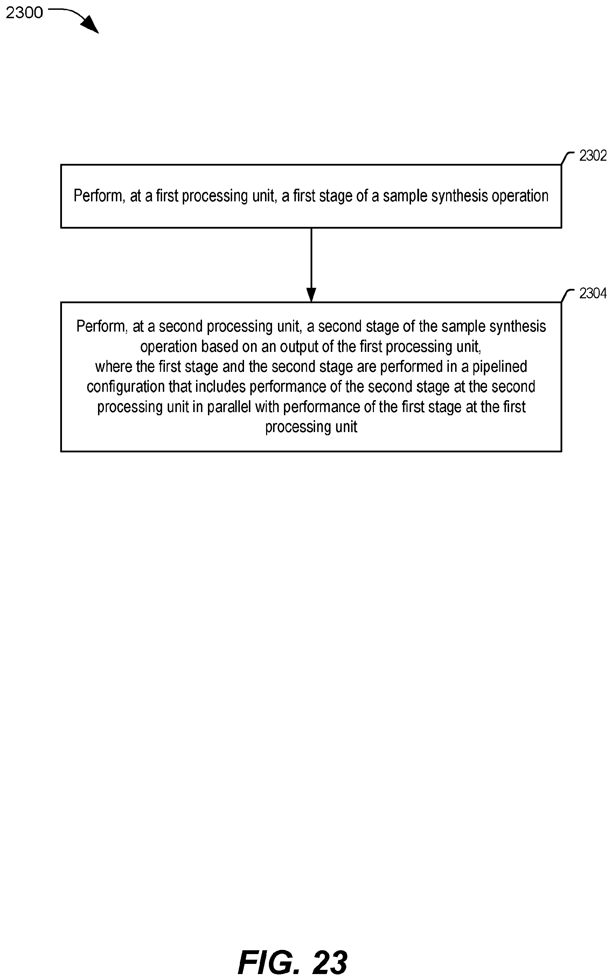

Referring to FIG. 23, a particular implementation of a method 2300 of generating sample data using pipelined processing units is shown. In a particular aspect, one or more operations of the method 2300 are performed by at least one of the neural network 132, the first processing unit 130, the second processing unit 140, the sample synthesizer 110, the one or more processors 190, the device 102, the system 100 of FIG. 1, or a combination thereof.

The method 2300 includes performing, at a first processing unit, a first stage of a sample synthesis operation, at block 2302. In an example, the sample synthesis operation corresponds to autoregressive sample-by-sample synthesis. In an illustrative implementation, the first processing unit corresponds to the first processing unit 130 of FIG. 1.

The method 2300 also includes performing, at a second processing unit, a second stage of the sample synthesis operation based on an output of the first processing unit, at block 2304. The first stage and the second stage are performed in a pipelined configuration that includes performance of the second stage at the second processing unit in parallel with performance of the first stage at the first processing unit. In an illustrative implementation, the second processing unit corresponds to the second processing unit 140 of FIG. 1.

According to some aspects, the second stage includes generating a residual based on the output of the first stage and processing the residual based on linear predictive coefficients to generate a sample of an audio signal, such as described with reference to FIGs. 11-13. In some implementations, the method 2300 also includes, at the second processing unit, populating an input queue of the first processing unit, while the first processing unit is processing a first iteration of the first stage, to initialize a second iteration of the first stage, such as described with respect to populating the input queue 332 with the input data 334 of FIG. 3.

In some implementations, the output data includes audio output data, and the method 2300 includes alternating, on a sample-by-sample basis, between generating samples of a first sequence of audio samples and generating samples of a second sequence of audio samples. In an example, such as depicted in FIGS. 3, 4, or 8, the first sequence of audio samples includes first subband audio samples corresponding to a first frequency band of the audio output data, and the second sequence of audio samples includes second subband audio samples corresponding to a second frequency band of the audio output data. In another example, such as depicted in FIG. 9, the first sequence of audio samples corresponds to odd-numbered samples of the audio output data, and the second sequence of audio samples corresponds to even-numbered samples of the audio output data. In another example, such as depicted in FIG. 10, the encoded audio data corresponds to stereo audio data that includes a first audio signal and a second audio signal, the first sequence of audio samples corresponds to the first audio signal, and the second sequence of audio samples corresponds to the second audio signal.

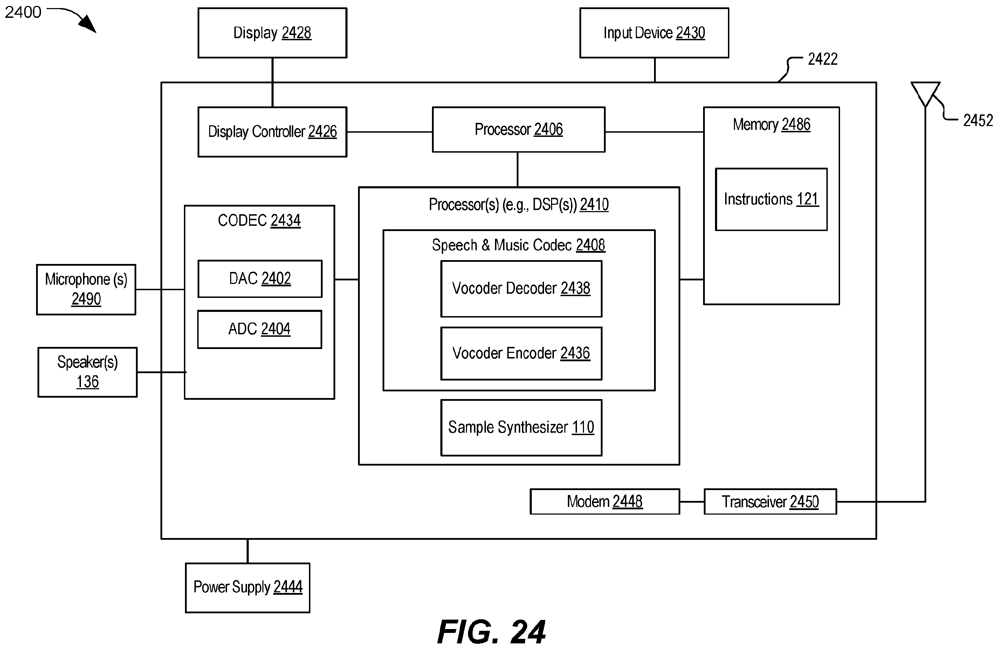

The method 2300 of FIG. 23 may be implemented by a field-programmable gate array (FPGA) device, an application-specific integrated circuit (ASIC), a processing unit such as a CPU, a DSP, a GPU, a controller, another hardware device, firmware device, or any combination thereof. As an example, the method 2300 of FIG. 23 may be performed by a processor that executes instructions, such as described with reference to FIG. 24.

Referring to FIG. 24, a block diagram of a particular illustrative implementation of a device is depicted and generally designated 2400. In various implementations, the device 2400 may have more or fewer components than illustrated in FIG. 24. In an illustrative implementation, the device 2400 may correspond to the device 102. In an illustrative implementation, the device 2400 may perform one or more operations described with reference to FIGS. 1-23.

In a particular implementation, the device 2400 includes a processor 2406 (e.g., a CPU). The device 2400 may include one or more additional processors 2410 (e.g., one or more DSPs, one or more GPUs, one or more NPUs, or a combination thereof). In a particular aspect, the one or more processors 190 of FIG. 1 correspond to the processor 2406, the processors 2410, or a combination thereof. The processors 2410 may include a speech and music coder-decoder (CODEC) 2408 that includes a voice coder ("vocoder") encoder 2436, a vocoder decoder 2438, or a combination thereof. In a particular aspect, the processors 2410 may include the sample synthesizer 110.

The device 2400 may include a memory 2486 and a CODEC 2434. In a particular aspect, the memory 2486 corresponds to the memory 120 of FIG. 1. The memory 2486 may include the instructions 121, that are executable by the one or more additional processors 2410 (or the processor 2406) to implement the functionality described with reference to the sample synthesizer 110. The device 2400 may include a modem 2448 coupled, via a transceiver 2450, to an antenna 2452. In a particular aspect, the transceiver 2450 may include the receiver 1138 and the modem 2448 may include the modem 1140 of FIG. 11.

The device 2400 may include a display 2428 coupled to a display controller 2426. One or more speakers 136, one or more microphones 2490, or a combination thereof, may be coupled to the CODEC 2434. The CODEC 2434 may include a digital-to-analog converter (DAC) 2402, an analog-to-digital converter (ADC) 2404, or both. In a particular implementation, the CODEC 2434 may receive analog signals from the one or more microphones 2490, convert the analog signals to digital signals using the analog-to-digital converter 2404, and provide the digital signals to the speech and music codec 2408. In a particular implementation, the speech and music codec 2408 may provide digital signals to the CODEC 2434. For example, the speech and music codec 2408 may provide the output data 124 generated by the sample synthesizer 110 to the CODEC 2434. The CODEC 2434 may convert the digital signals to analog signals using the digital-to-analog converter 2402 and may provide the analog signals to the one or more speakers 136.

In a particular implementation, the device 2400 may be included in a system-in-package or system-on-chip device 2422. In a particular implementation, the memory 2486, the processor 2406, the processors 2410, the display controller 2426, the CODEC 2434, and the modem 2448 are included in the system-in-package or system-on-chip device 2422. In a particular implementation, an input device 2430 and a power supply 2444 are coupled to the system-in-package or the system-on-chip device 2422. Moreover, in a particular implementation, as illustrated in FIG. 24, the display 2428, the input device 2430, the one or more speakers 136, the one or more microphones 2490, the antenna 2452, and the power supply 2444 are external to the system-in-package or the system-on-chip device 2422. In a particular implementation, each of the display 2428, the input device 2430, the one or more speakers 136, the one or more microphones 2490, the antenna 2452, and the power supply 2444 may be coupled to a component of the system-in-package or the system-on-chip device 2422, such as an interface or a controller.

The device 2400 may include a smart speaker, a speaker bar, a mobile communication device, a smart phone, a cellular phone, a laptop computer, a computer, a tablet, a personal digital assistant, a display device, a television, a gaming console, a music player, a radio, a digital video player, a digital video disc (DVD) player, a tuner, a camera, a navigation device, a vehicle, a headset, an augmented reality headset, a mixed reality headset, a virtual reality headset, an aerial vehicle, a home automation system, a voice-activated device, a wireless speaker and voice activated device, a portable electronic device, a car, a computing device, a communication device, an internet-of-things (IoT) device, a virtual reality (VR) device, a base station, a mobile device, or any combination thereof.

In conjunction with the described implementations, an apparatus includes means for storing instructions. For example, the means for storing instructions can correspond to the memory 120, the device 102, the system 100, the cache 760, the memory 2486, the device 2400, one or more other circuits or devices configured to store instructions, or any combination thereof.

The apparatus also includes means for processing input data to generate output data. For example, the means for processing the input data can correspond to the sample synthesizer 110, the one or more processors 190, the device 102, the system 100, the speech and music codec 2408, the processor 2406, the one or more processors 2410, the device 2400, one or more other circuits or devices configured to input data to generate output data, or any combination thereof.

The means for processing input data includes means for performing a first stage of a sample synthesis operation. For example, the means for performing the first stage of the sample synthesis operation can correspond to the first processing unit 130, the neural network 132, the sample synthesizer 110, the one or more processors 190, the device 102, the system 100, the GRU-A 210, the GRU-B 212, the dual-FC 214, the NPU 330, the GPU 530, the first core 630, the CPU 602, one or more of the execution units 720-724, the scheduler 710, the first thread 730, the CPU core 702, the speech and music codec 2408, the processor 2406, the one or more processors 2410, the device 2400, one or more other circuits or devices configured to perform the first stage of a sample synthesis operation, or any combination thereof.

The means for processing input data also includes means for performing a second stage of the sample synthesis operation based on an output of the means for performing the first stage of the sample synthesis operation. For example, the means for performing the second stage of the sample synthesis operation can correspond to the second processing unit 140, the sample synthesizer 110, the one or more processors 190, the device 102, the system 100, the DSP 430, the CPU 540, the second core 640, the CPU 602, one or more of the execution units 720-724, the scheduler 710, the second thread 740, the CPU core 702, the speech and music codec 2408, the processor 2406, the one or more processors 2410, the device 2400, one or more other circuits or devices configured to perform the second stage of a sample synthesis operation, or any combination thereof.

The means for performing the first stage of the sample synthesis operation and the means for performing the second stage of the sample synthesis operation are configured to operate in a pipelined configuration that includes performance of the second stage in parallel with performance of the first stage.

In some implementations, a non-transitory computer-readable medium (e.g., a computer-readable storage device, such as the memory 120 or the memory 2486) includes instructions (e.g., the instructions 121) that, when executed by one or more processors (e.g., the one or more processors 190, the one or more processors 2410, or the processor 2406), cause the one or more processors to perform, at a first processing unit (e.g., the first processing unit 130), a first stage of a sample synthesis operation (e.g., the first stage 152 of the sample synthesis operation 150), and perform, at a second processing unit (e.g., the second processing unit 140), a second stage of the sample synthesis operation (e.g., the second stage 154 of the sample synthesis operation 150) based on an output (e.g., the output 134) of the first processing unit. The first stage and the second stage are performed during processing of input data (e.g., the input data 122) to generate output data (e.g., the output data 124), and the first stage and the second stage are performed in a pipelined configuration (e.g., the pipelined configuration 160) that includes performance of the second stage at the second processing unit in parallel with performance of the first stage at the first processing unit.

Those of skill would further appreciate that the various illustrative logical blocks, configurations, modules, circuits, and algorithm steps described in connection with the implementations disclosed herein may be implemented as electronic hardware, computer software executed by a processor, or combinations of both. Various illustrative components, blocks, configurations, modules, circuits, and steps have been described above generally in terms of their functionality. Whether such functionality is implemented as hardware or processor executable instructions depends upon the particular application and design constraints imposed on the overall system. Skilled artisans may implement the described functionality in varying ways for each particular application.

The steps of a method or algorithm described in connection with the implementations disclosed herein may be embodied directly in hardware, in a software module executed by a processor, or in a combination of the two. A software module may reside in random access memory (RAM), flash memory, read-only memory (ROM), programmable read-only memory (PROM), erasable programmable read-only memory (EPROM), electrically erasable programmable read-only memory (EEPROM), registers, hard disk, a removable disk, a compact disc read-only memory (CD-ROM), or any other form of non-transient storage medium known in the art. An exemplary storage medium is coupled to the processor such that the processor may read information from, and write information to, the storage medium. In the alternative, the storage medium may be integral to the processor. The processor and the storage medium may reside in an application-specific integrated circuit (ASIC). The ASIC may reside in a computing device or a user terminal. In the alternative, the processor and the storage medium may reside as discrete components in a computing device or user terminal.

The previous description of the disclosed aspects is provided to enable a person skilled in the art to make or use the disclosed aspects. Various modifications to these aspects will be readily apparent to those skilled in the art, and the principles defined herein may be applied to other aspects without departing from the scope of the disclosure. Thus, the present disclosure is not intended to be limited to the aspects shown herein but is to be accorded the scope of the following claims.

## Claims

1. A device comprising:
a memory configured to store instructions; and
a processor coupled to the memory, the processor including:
a first processing unit (130, 330, 530, 630, 730) configured to perform (2302) a first stage of a sample synthesis operation, wherein the first processing unit includes an input queue;
a second processing unit (140, 340, 540, 640, 740) configured to perform (2304) a second stage of the sample synthesis operation based on an output of the first processing unit, wherein the second processing unit is further configured to populate the input queue, while the first processing unit is processing a first iteration of the first stage, to initialize a second iteration of the first stage; and a sample synthesizer (110) configured to process audio input data, using the first processing unit and the second processing unit, to generate audio output data, wherein the first processing unit and the second processing unit are configured to operate in a pipelined configuration that includes performance of the second stage at the second processing unit in parallel with performance of the first stage at the first processing unit.

2. The device of claim 1, wherein the second processing unit is configured to:
generate a residual based on the output of the first stage; and
process the residual based on linear predictive coefficients to generate a sample of an audio signal.

3. The device of claim 1, wherein the sample synthesizer is configured to alternate, on a sample-by-sample basis, between generation of samples of a first sequence of audio samples and generation of samples of a second sequence of audio samples.

4. The device of claim 3, wherein the first sequence of audio samples includes first subband audio samples corresponding to a first frequency band of the audio output data and wherein the second sequence of audio samples includes second subband audio samples corresponding to a second frequency band of the audio output data.

5. The device of claim 4, wherein the sample synthesizer includes a reconstructor configured to generate an audio sample of the audio output data based on at least a first subband audio sample corresponding to the first frequency band and a second subband audio sample corresponding to the second frequency band.

6. The device of claim 4, wherein the first processing unit includes a neural network, wherein the first subband audio samples are processed according to a first configuration of the neural network, and wherein the second subband audio samples are processed according to a second configuration of the neural network.

7. The device of claim 4, wherein a first range of frequencies associated with the first frequency band is wider than a second range of frequencies associated with the second frequency band; or
wherein a first range of frequencies associated with the first frequency band has a same width as a second range of frequencies associated with the second frequency band; or
wherein a first range of frequencies associated with the first frequency band partially overlaps a second range of frequencies associated with the second frequency band.

8. The device of claim 3, wherein the first sequence of audio samples corresponds to odd-numbered samples of the audio output data and wherein the second sequence of audio samples corresponds to even-numbered samples of the audio output data.

9. The device of claim 3, wherein the input data corresponds to stereo audio data that includes a first audio signal and a second audio signal, wherein the first sequence of audio samples corresponds to the first audio signal, and wherein the second sequence of audio samples corresponds to the second audio signal.

10. The device of claim 1, wherein the first processing unit includes a neural processing unit (330), and wherein the second processing unit includes a digital signal processor (340); or
wherein the first processing unit includes a graphics processing unit (530), and wherein the second processing unit includes a central processing unit (540); or
wherein the first processing unit includes a first core (630) of a central processing unit, and wherein the second processing unit includes a second core of the central processing unit (640); or
wherein the first processing unit corresponds to a first thread of a core of a central processing unit, and wherein the second processing unit corresponds to a second thread of the core of the central processing unit.

11. The device of claim 1, wherein the sample synthesis operation corresponds to autoregressive sample-by-sample synthesis.

12. The device of claim 1, further comprising:
a modem configured to receive the input data as encoded input data from a second device; and
a decoder configured to decode the encoded input data to generate feature data, wherein the feature data is input to at least one of the first processing unit and the second processing unit.

13. A method of generating audio output data based on audio input data, the method including: performing (2302), at a first processing unit (130, 330, 530, 630, 730), a first stage of a sample synthesis operation;
performing (2304), at a second processing unit (140, 340, 540, 640, 740), a second stage of the sample synthesis operation based on an output of the first processing unit, and
populating, at the second processing unit, an input queue of the first processing unit, while the first processing unit is processing a first iteration of the first stage, to initialize a second iteration of the first stage,
wherein the first stage and the second stage are performed in a pipelined configuration that includes performance of the second stage at the second processing unit in parallel with performance of the first stage at the first processing unit.

14. A non-transitory computer-readable medium storing instructions that, when executed by one or more processors, cause the one or more processors to:
perform the method of claim 13.

15. The device of claim 1, wherein the memory and the processor are integrated into at least one of a smart speaker, a speaker bar, a computer, a tablet, a display device, a television, a gaming console, a music player, a radio, a digital video player, a camera, a navigation device, a vehicle, a headset, an augmented reality headset, a mixed reality headset, a virtual reality headset, an aerial vehicle, a home automation system, a voice-activated device, a wireless speaker and voice activated device, a portable electronic device, a communication device, an internet-of-things, IoT, device, a virtual reality, VR, device, a base station, or a mobile device.

## Patentansprüche

1. Gerät, das Folgendes umfasst:
einen Speicher, konfiguriert zum Speichern von Befehlen; und
einen mit dem Speicher gekoppelten Prozessor, wobei der Prozessor Folgendes umfasst:
eine erste Verarbeitungseinheit (130, 330, 530, 630, 730), konfiguriert zum Ausführen (2302) einer ersten Stufe eines Sample-Synthesevorgangs, wobei die erste Verarbeitungseinheit eine Eingangswarteschlange enthält;
eine zweite Verarbeitungseinheit (140, 340, 540, 640, 740), konfiguriert zum Ausführen (2304) einer zweiten Stufe des Sample-Synthesevorgangs auf der Basis eines Ausgangs der ersten Verarbeitungseinheit, wobei die zweite Verarbeitungseinheit ferner zum Füllen der Eingangswarteschlange konfiguriert ist, während die erste Verarbeitungseinheit eine erste Iteration der ersten Stufe verarbeitet, um eine zweite Iteration der ersten Stufe zu initialisieren; und einen Sample-Synthesizer (110), konfiguriert zum Verarbeiten von Audioeingangsdaten mittels der ersten Verarbeitungseinheit und der zweiten Verarbeitungseinheit, um Audioausgangsdaten zu erzeugen, wobei die erste Verarbeitungseinheit und die zweite Verarbeitungseinheit zum Arbeiten in einer Pipeline-Konfiguration konfiguriert sind, die das Ausführen der zweiten Stufe in der zweiten Verarbeitungseinheit parallel zur Ausführung der ersten Stufe in der ersten Verarbeitungseinheit beinhaltet.

2. Gerät nach Anspruch 1, wobei die zweite Verarbeitungseinheit konfiguriert ist zum:
Erzeugen eines Rests auf der Basis des Ausgangs der ersten Stufe; und
Verarbeiten des Rests auf der Basis linearer Prädiktionskoeffizienten zum Erzeugen eines Sample eines Audiosignals.

3. Gerät nach Anspruch 1, wobei der Sample-Synthesizer zum Wechseln, von Sample zu Sample, zwischen dem Erzeugen von Samples einer ersten Folge von Audio-Samples und dem Erzeugen von Samples einer zweiten Folge von Audio-Samples konfiguriert ist.

4. Gerät nach Anspruch 3, wobei die erste Folge von Audio-Samples erste Subband-Audio-Samples entsprechend einem ersten Frequenzband der Audioausgangsdaten enthält und wobei die zweite Folge von Audio-Samples zweite Subband-Audio-Samples entsprechend einem zweiten Frequenzband der Audioausgangsdaten enthält.

5. Gerät nach Anspruch 4, wobei der Sample-Synthesizer einen Rekonstruktor umfasst, der zum Erzeugen eines Audio-Sample der Audioausgangsdaten auf der Basis von mindestens einem ersten Subband-Audio-Sample entsprechend dem ersten Frequenzband und einem zweiten Subband-Audio-Sample entsprechend dem zweiten Frequenzband konfiguriert ist.

6. Gerät nach Anspruch 4, wobei die erste Verarbeitungseinheit ein neuronales Netzwerk umfasst, wobei die ersten Subband-Audio-Samples gemäß einer ersten Konfiguration des neuronalen Netzwerks verarbeitet werden und wobei die zweiten Subband-Audio-Samples gemäß einer zweiten Konfiguration des neuronalen Netzwerks verarbeitet werden.

7. Gerät nach Anspruch 4, wobei ein mit dem ersten Frequenzband assoziierter erster Frequenzbereich breiter ist als ein mit dem zweiten Frequenzband assoziierter zweiter Frequenzbereich; oder
wobei ein mit dem ersten Frequenzband assoziierter erster Frequenzbereich dieselbe Breite hat wie ein mit dem zweiten Frequenzband assoziierter zweiter Frequenzbereich; oder
wobei ein mit dem ersten Frequenzband assoziierter erster Frequenzbereich einen mit dem zweiten Frequenzband assoziierten zweiten Frequenzbereich teilweise überlappt.

8. Gerät nach Anspruch 3, wobei die erste Folge von Audio-Samples ungeradzahligen Samples der Audioausgangsdaten entspricht und wobei die zweite Folge von Audio-Samples geradzahligen Samples der Audioausgangsdaten entspricht.

9. Gerät nach Anspruch 3, wobei die Eingangsdaten Stereo-Audiodaten entsprechen, die ein erstes Audiosignal und ein zweites Audiosignal enthalten, wobei die erste Folge von Audio-Samples dem ersten Audiosignal entspricht und wobei die zweite Folge von Audio-Samples dem zweiten Audiosignal entspricht.

10. Gerät nach Anspruch 1, wobei die erste Verarbeitungseinheit eine neuronale Verarbeitungseinheit (330) umfasst und wobei die zweite Verarbeitungseinheit einen digitalen Signalprozessor (340) umfasst; oder
wobei die erste Verarbeitungseinheit eine Grafikverarbeitungseinheit (530) umfasst und wobei die zweite Verarbeitungseinheit eine Zentraleinheit (540) umfasst; oder
wobei die erste Verarbeitungseinheit einen ersten Kern (630) einer Zentraleinheit umfasst und wobei die zweite Verarbeitungseinheit einen zweiten Kern der Zentraleinheit (640) umfasst; oder
wobei die erste Verarbeitungseinheit einem ersten Thread eines Kerns einer Zentraleinheit entspricht und wobei die zweite Verarbeitungseinheit einem zweiten Thread des Kerns der Zentraleinheit entspricht.

11. Gerät nach Anspruch 1, wobei der Sample-Synthesevorgang einer autoregressiven Sample-für-Sample-Synthese entspricht.

12. Gerät nach Anspruch 1, das ferner Folgendes umfasst:
ein Modem, konfiguriert zum Empfangen der Eingangsdaten als encodierte Eingangsdaten von einem zweiten Gerät; und
einen Decoder, konfiguriert zum Decodieren der encodierten Eingangsdaten zum Erzeugen von Merkmalsdaten, wobei die Merkmalsdaten in die erste und/oder die zweite Verarbeitungseinheit eingegeben werden.

13. Verfahren zum Erzeugen von Audioausgangsdaten auf der Basis von Audioeingangsdaten, wobei das Verfahren Folgendes beinhaltet:
Ausführen (2302), an einer ersten Verarbeitungseinheit (130, 330, 530, 630, 730), einer ersten Stufe eines Sample-Synthesevorgangs;
Durchführen (2304), an einer zweiten Verarbeitungseinheit (140, 340, 540, 640, 740), einer zweiten Stufe des Sample-Synthesevorgangs auf der Basis eines Ausgangs der ersten Verarbeitungseinheit und
Füllen, in der zweiten Verarbeitungseinheit, einer Eingangswarteschlange der ersten Verarbeitungseinheit, während die erste Verarbeitungseinheit eine erste Iteration der ersten Stufe verarbeitet, um eine zweite Iteration der ersten Stufe zu initialisieren,
wobei die erste Stufe und die zweite Stufe in einer Pipeline-Konfiguration ausgeführt werden, die das Ausführen der zweiten Stufe in der zweiten Verarbeitungseinheit parallel zur Ausführung der ersten Stufe in der ersten Verarbeitungseinheit umfasst.

14. Nichtflüchtiges, computerlesbares Medium, das Befehle speichert, die bei Ausführung durch einen oder mehrere Prozessoren die ein oder mehreren Prozessoren zum Durchführen des Verfahrens nach Anspruch 13 veranlassen.

15. Gerät nach Anspruch 1, wobei der Speicher und der Prozessor in mindestens eines von einem/r Smart-Lautsprecher, Speakerbar, Computer, Tablet, Anzeigegerät, Fernseher, Spielekonsole, Musikplayer, Radio, digitalen Videoplayer, Kamera, Navigationsgerät, Fahrzeug, Headset, Augmented-Reality-Headset, Mixed-Reality-Headset, Virtual-Reality-Headset, Luftfahrzeug, Heimautomationssystem, sprachgesteuerten Gerät, drahtlosen Lautsprecher und sprachgesteuerten Gerät, tragbaren elektronischen Gerät, Kommunikationsgerät, IoT-(Internet-of-Things)-Gerät, VR-(Virtual Reality)-Gerät, Basisstation und einem mobilen Gerät integriert sind.

## Revendications

1. Dispositif comprenant :
une mémoire configurée pour stocker des instructions ; et
un processeur couplé à la mémoire, le processeur comprenant :
une première unité de traitement (130, 330, 530, 630, 730) configurée pour réaliser (2302) une première étape d'une opération de synthèse d'échantillons, dans lequel la première unité de traitement comporte une file d'attente d'entrée ;
une seconde unité de traitement (140, 340, 540, 640, 740) configurée pour réaliser (2304) une seconde étape de l'opération de synthèse d'échantillons sur la base d'une sortie de la première unité de traitement, dans lequel la seconde unité est configurée en outre pour remplir la file d'entrée tandis que la première unité de traitement traite une première itération de la première étape, pour initialiser une seconde itération de la première étape ; et un synthétiseur d'échantillons (110) configuré pour traiter des données d'entrée audio, à l'aide de la première unité de traitement et de la seconde unité de traitement, pour générer des données de sortie audio, dans lequel la première unité de traitement et la seconde unité de traitement sont configurées pour fonctionner dans une configuration en pipeline qui comporte la réalisation de la seconde étape au niveau de la seconde unité de traitement en parallèle avec la réalisation de la première étape au niveau de la première unité de traitement.

2. Dispositif selon la revendication 1, dans lequel la seconde unité de traitement est configurée pour :
générer un résidu sur la base de la sortie de la première étape ; et
traiter le résidu sur la base de coefficients prédictifs linéaires pour générer un échantillon d'un signal audio.

3. Dispositif selon la revendication 1, dans lequel le synthétiseur d'échantillons est configuré pour alterner, échantillon par échantillon, entre la génération d'échantillons d'une première séquence d'échantillons audio et la génération d'échantillons d'une seconde séquence d'échantillons audio.

4. Dispositif selon la revendication 3, dans lequel la première séquence d'échantillons audio comporte des premiers échantillons audio de sous-bande correspondant à une première bande de fréquences des données de sortie audio, et dans lequel la seconde séquence d'échantillons audio comporte des seconds échantillons audio de sous-bande correspondant à une seconde bande de fréquences des données de sortie audio.

5. Dispositif selon la revendication 4, dans lequel le synthétiseur d'échantillons comporte un reconstructeur configuré pour générer un échantillon audio des données de sortie audio sur la base d'au moins un premier échantillon audio de sous-bande correspondant à la première bande de fréquences et d'un second échantillon audio de sous-bande correspondant à la seconde bande de fréquences.

6. Dispositif selon la revendication 4, dans lequel la première unité de traitement comporte un réseau de neurones, dans lequel les premiers échantillons audio de sous-bande sont traités conformément à une première configuration du réseau de neurones, et dans lequel les seconds échantillons audio de sous-bande sont traités conformément à une seconde configuration du réseau de neurones.

7. Dispositif selon la revendication 4, dans lequel une première plage de fréquences associée à la première bande de fréquences est plus large qu'une seconde plage de fréquences associée à la seconde bande de fréquences ; ou
dans lequel une première plage de fréquences associée à la première bande a la même largeur qu'une seconde plage de fréquences associée à la seconde bande ; ou
dans lequel une première plage de fréquences associée à la première bande de fréquences chevauche partiellement une seconde plage de fréquences associée à la seconde bande de fréquences.

8. Dispositif selon la revendication 3, dans lequel la première séquence d'échantillons audio correspond à des échantillons impairs des données de sortie audio et dans lequel la seconde séquence correspond à des échantillons pairs des données de sortie audio.

9. Dispositif selon la revendication 3, dans lequel les données d'entrée correspondent à des données audio stéréo qui comportent un premier signal audio et un second signal audio, dans lequel la première séquence d'échantillons audio correspond au premier signal audio, et dans lequel la seconde séquence d'échantillons audio correspond au second signal audio.

10. Dispositif selon la revendication 1, dans lequel la première unité de traitement comprend une unité de traitement neuronal (330), et dans lequel la seconde unité de traitement comprend un processeur de signal numérique (340) ; ou
dans lequel la première unité de traitement comporte un processeur graphique (530), et dans lequel la seconde unité de traitement comprend une unité centrale de traitement (540) ; ou
dans lequel la première unité de traitement comporte un premier cœur (630) d'une unité centrale de traitement, et dans lequel la seconde unité de traitement comporte un second cœur de l'unité centrale de traitement (640) ; ou
dans lequel la première unité de traitement correspond à un premier fil d'exécution d'un cœur d'une unité centrale de traitement, et dans lequel la seconde unité de traitement correspond à un second fil d'exécution du cœur de l'unité centrale de traitement.

11. Dispositif selon la revendication 1, dans lequel l'opération de synthèse d'échantillons correspond à une synthèse autorégressive échantillon par échantillon.

12. Dispositif selon la revendication 1, comprenant en outre :
un modem configuré pour recevoir les données d'entrée sous forme de données d'entrée encodées à partir d'un second dispositif ; et
un décodeur configuré pour décoder les données d'entrée encodées afin de générer des données caractéristiques, dans lequel les données caractéristiques sont entrées dans au moins une de la première unité de traitement et de la seconde unité de traitement.

13. Procédé de génération de données de sortie audio sur la base de données d'entrée audio, le procédé comportant : la réalisation (2302), au niveau d'une première unité de traitement (130, 330, 530, 630, 730), d'une première étape d'une opération de synthèse d'échantillons ;
la réalisation (2304), au niveau d'une seconde unité de traitement (140, 340, 540, 640, 740), d'une seconde étape de l'opération de synthèse d'échantillons sur la base d'une sortie de la première unité de traitement, et
le remplissage, au niveau de la seconde unité de traitement, d'une file d'attente d'entrée de la première unité de traitement tandis que la première unité traite une première itération de la première étape, pour initialiser une seconde itération de la première étape,
dans lequel la première étape et la seconde étape sont réalisées dans une configuration en pipeline qui comporte la réalisation de la seconde étape au niveau de la seconde unité de traitement en parallèle avec la réalisation de la première étape au niveau de la première unité de traitement.

14. Support non transitoire lisible par ordinateur stockant des instructions qui, une fois exécutées par un ou plusieurs processeurs, amènent les un ou plusieurs processeurs à :
réaliser le procédé selon la revendication 13.

15. Dispositif selon la revendication 1, dans lequel la mémoire et le processeur sont intégrés à au moins un d'un haut-parleur intelligent, d'une barre de haut-parleurs, d'un ordinateur, d'une tablette informatique, d'un dispositif d'affichage, d'un téléviseur, d'une console de jeu, d'un lecteur de musique, d'une radio, d'un lecteur vidéo numérique, d'une caméra, d'un dispositif de navigation, d'un véhicule, d'un casque, d'un casque de réalité augmentée, d'un casque de réalité mixte, d'un casque de réalité virtuelle, d'un véhicule aérien, d'un système d'automatisation domestique, d'un dispositif à commande vocale, d'un dispositif de haut-parleur sans fil et à commande vocale, d'un dispositif électronique portable, d'un dispositif de communication, d'un dispositif de l'Internet des objets, IoT, d'un dispositif de réalité virtuelle, VR, d'une station de base ou d'un dispositif mobile.
